# EUROPEAN PATENT APPLICATION

(11) **EP 4 292 820 A1**
(43) Date of publication of application: **20.12.2023**
(21) Application number: 21934871.1
(22) Date of filing: 31.03.2021
(51) Int. Cl.: B41J 2/01, C09D 11/30, C09D 11/54

(54) **INK SET FOR INKJET RECORDING, INKJET RECORDING METHOD, MAINTENANCE METHOD, AND INKJET RECORDING APPARATUS**

(71) Applicant: KONICA MINOLTA, INC., Tokyo 100-7015 (JP)
(72) Inventor: KAMII, Ayumi, Tokyo 100-7015 (JP); KANEKO, Manabu, Tokyo 100-7015 (JP); HAMAGAMI, Hiroki, Tokyo 100-7015 (JP)
(74) Representative: Gille Hrabal Partnerschaftsgesellschaft mbB Patentanwälte
(86) International application number: PCT/JP2021/013758
(87) International publication number: WO 2022/208702

(57) **Abstract**

An object of the present invention is to provide an ink set for inkjet recording, an inkjet recording method, a maintenance method, and an inkjet recording apparatus, in which adverse effects caused by a pretreatment liquid component are reduced and the maintainability is improved.

The ink set for inkjet recording of the present invention is an ink set for inkjet recording including an ink composition, a pretreatment liquid, and a maintenance liquid, wherein the pretreatment liquid contains a polyvalent metal salt, and the maintenance liquid contains an acidic component.

## Description

### Technical Field

The present invention relates to an ink set for inkjet recording, an inkjet recording method, a maintenance method, and an inkjet recording apparatus. More specifically, the present invention relates to an ink set for inkjet recording and the like in which adverse effects caused by a pretreatment liquid component are reduced and the maintainability is improved.

### Background Art

The inkjet recording (also referred to as "printing") method is a recording method in which droplets of ink are ejected from an inkjet head and landed on a base material such as paper. In this method, high-resolution and high-quality images can be printed at high speed with a relatively inexpensive apparatus.

In inkjet printing, particularly in the case where an aqueous ink is used, when a pattern of characters or images is printed on a base material, the liquid component permeates into the base material and dries, and then the ink is fixed. When a base material is made of plain paper, special paper, or high-permeability paper such as high-quality paper or regeneration paper, it is possible to fix the ink and provide a high-quality image, but when a base material is made of a low-permeability material such as coated paper, art paper, fine coated paper, or film base material, it is difficult for ink droplets after landing to permeate into the base material, so that the ink droplets are not dried by permeation, and bleeding occurs between the droplets, and the image quality is impaired.

For this problem, a pretreatment step of applying a pretreatment liquid to a base material having low permeability is known. As the pretreatment liquid (also referred to as "reaction liquid" or "treatment liquid"), two types of pretreatment liquids are known: one that forms a layer (ink receiving layer) that absorbs a liquid component of an ink and improves drying properties, and one that forms a layer (ink aggregation layer) that aggregates a solid component and intentionally causes thickening of the ink, thereby preventing bleeding and color unevenness between ink droplets.

The pretreatment liquid for forming the ink aggregation layer includes a flocculant for the purpose of aggregating the solid component of the ink and thickening the ink. As such a flocculant, an organic acid, a cationic polymer, a polyvalent metal salt, or the like are used. However, an organic acid may accelerate deterioration depending on the member of the ejection apparatus, and thus the usable apparatus is limited. In addition, it is difficult for an ink using a cationic polymer to obtain stable droplet ejection due to viscosity and properties of the polymer itself.

In addition to these viewpoints, from the viewpoint of having a high reactivity with the solid components of the ink, it is preferable to use a polyvalent metal salt as a flocculant. On the other hand, when the pretreatment liquid is applied from an inkjet head, a dried matter of the pretreatment liquid is precipitated on the nozzle of the inkjet head, and a defective ejection of the pretreatment liquid due to clogging of the nozzle occurs. Therefore, when a polyvalent metal salt is used as the flocculant, the nozzle needs to be cleaned, and a technique of using with a maintenance liquid is known.

In Patent Document 1, a technique of a maintenance liquid containing a water-soluble organic solvent having a boiling point of 280°C or lower and water is disclosed. The maintenance liquid can be removed when the polyvalent metal salt itself is precipitated by evaporation of water, but it is difficult to remove the carbonate produced by the reaction between carbon dioxide in the air and metal ions.

In Patent Document 2, a technique of a maintenance liquid including a chelating agent and a surfactant is disclosed. The maintenance liquid can suppress the aggregation of the ink on the nozzle surface by containing a surfactant. In addition, metal ions in the aggregate can be chelated and the aggregate can be redispersed by containing a chelating agent, but it is difficult to remove the carbonate.

In Patent Document 3, a technique of a maintenance liquid including an organic solvent and water is disclosed. However, the maintenance liquid is intended to improve clogging of the ink due to evaporation of water of the ink and solidification, and is not intended to remove the dried matter of the pretreatment liquid.

As described above, the maintenance liquids in Patent Documents 1 to 3 are not intended to remove the carbonate produced by the reaction between metal ions and carbon dioxide in the air when the polyvalent metal salt is contained in the pretreatment liquid, and it is actually difficult to remove the carbonate.

### Citation List

### Patent Literature

Patent Document 1: JP 2017-189889 A
Patent Document 2: JP 2020-131625 A
Patent Document 3: JP 2010-215853 A

### Summary of the Invention

### Problem to be solved by the Invention

The present invention has been made in view of the above problems and situations, and a problem to be solved is to provide an ink set for inkjet recording, an inkjet recording method, a maintenance method, and an inkjet recording apparatus, in which adverse effects caused by a pretreatment liquid component are reduced and the maintainability is improved.

### Means for solving the Problem

In order to solve the above problem, the present inventors studied the causes and the like of the above problem, and found that when a polyvalent metal salt is used as a flocculant for a pretreatment liquid, a dried matter of the pretreatment liquid is precipitated on the nozzle of the inkjet head, and therefore, maintenance needs to be performed, but in a conventionally known technique, there is room for further improving the maintainability. As a result of repeated studies, it was found that the maintainability is improved by including an acidic component in the maintenance liquid.

That is, the above problem according to the present invention is solved by the following means.
1. An ink set for inkjet recording comprising an ink composition, a pretreatment liquid, and a maintenance liquid, wherein the pretreatment liquid contains a polyvalent metal salt, and the maintenance liquid contains an acidic component.
2. The ink set for inkjet recording according to item 1, wherein the pretreatment liquid contains an acidic component.
3. The ink set for inkjet recording according to item 1 or 2, wherein the polyvalent metal salt contains at least a metal element of either calcium or magnesium.
4. The ink set for inkjet recording according to any one of items 1 to 3, wherein the pretreatment liquid contains at least an acid of citric acid, acetic acid, or glycolic acid.
5. The ink set for inkjet recording according to any one of items 1 to 4, wherein the maintenance liquid contains at least an acid of citric acid, acetic acid, or glycolic acid.
6. The ink set for inkjet recording according to any one of items 1 to 5, wherein the maintenance liquid contains at least an acid of either citric acid or acetic acid, and contains a salt thereof.
7. The ink set for inkjet recording according to any one of items 1 to 6, wherein a pH value of the maintenance liquid is in the range of 5.0 to 6.4 at 25°C.
8. An inkjet recording method for recording using the ink set for inkjet recording according to any one of items 1 to 7, comprising: a step of applying the pretreatment liquid simultaneously with or immediately before the step of ejecting the ink composition.
9. The inkjet recording method according to item 8, comprising: a step of cleaning a head for pretreatment liquid for applying the pretreatment liquid using the maintenance liquid.
10. The inkjet recording method according to item 9, comprising: a step of cleaning the head for pretreatment liquid using a wiping member.
11. A maintenance method for an inkjet recording apparatus, comprising: using the ink set for inkjet recording according to any one of items 1 to 7.
12. An inkjet recording apparatus, comprising: using the inkjet recording method according to any one of items 8 to 10.

### Effect of the Invention

The above means of the present invention provides an ink set for inkjet recording, an inkjet recording method, a maintenance method, and an inkjet recording apparatus, in which adverse effects caused by a pretreatment liquid component are reduced and the maintainability is improved.

The expression mechanism or action mechanism of the effect of the present invention has not been clarified, but it is inferred as follows.

When a pretreatment liquid using a polyvalent metal salt as a flocculant is applied from an inkjet head, a dried matter of the pretreatment liquid precipitates on the nozzle of the inkjet head, and a defective ejection of the pretreatment liquid due to clogging of the nozzle occurs. Therefore, maintenance of the nozzle needs to be performed, but in the conventionally known maintenance technique, the dried matter of the pretreatment liquid precipitated on the nozzle is not sufficiently removed.

The present inventors have studied and found that the dried matter of the pretreatment liquid contains a carbonate produced by the reaction between carbon dioxide in air and metal ions. Further, they have found that the carbonate is difficult to be removed by the conventionally known maintenance technique, and that the carbonate can be removed by including an acidic component in the maintenance liquid.

That is, the carbonate is a salt composed of a carbonate ion and a metal ion, and a carbonic acid is an extremely weak acid (a weak acid) among the acids. Therefore, in many acidic components, the carbonate is dissolved, the carbonic acid is liberated, and carbon dioxide is generated. Therefore, it is presumed that the carbonate can be removed by such a reaction mechanism.

### Brief Description of the Drawings

[FIG. 1] This is a schematic diagram showing a preferred example of an inkjet recording apparatus of the present invention.
[FIG. 2] This is a schematic diagram showing a preferred example of a droplet ejecting unit adopting a scanning system.
[FIG. 3] This is a diagram viewed from the conveyance direction in the droplet ejecting unit 120.
[FIG. 4] This is a schematic diagram showing a preferred example of an inkjet recording apparatus including an apparatus for cleaning using a maintenance liquid.
[FIG. 5] This is a schematic diagram showing a preferred example of a maintenancer 230.
[FIG. 6] This is a schematic diagram showing a preferred example of the wiping operation of a maintenancer 230.
[FIG. 7] This is a cross-sectional view showing a schematic configuration of an image recorded matter recorded by an ink for inkjet recording and an inkjet recording method of the present invention.
[FIG. 8] This is a cross-sectional view of a packaging material for canned foods.

### Mode for Carrying out the Invention

The ink set for inkjet recording of the present invention is an ink set for inkjet recording including an ink composition, a pretreatment liquid, and a maintenance liquid, wherein the pretreatment liquid contains a polyvalent metal salt, and the maintenance liquid contains an acidic component

This feature is the technical feature that is the same as or corresponding to the following embodiments.

As an embodiment of the present invention, from the viewpoint of suppressing the production of carbonate, it is preferable that the pretreatment liquid contains an acidic component.

From the viewpoint of suppressing a decrease in image saturation, it is preferable that the polyvalent metal salt contains at least a metal element of either calcium or magnesium.

From the viewpoint of suppressing the production of carbonate, it is preferable that the pretreatment liquid contains at least an acid of citric acid, acetic acid or glycolic acid.

From the viewpoint of efficiently removing the carbonate, it is preferable that the maintenance liquid contains at least an acid of citric acid, acetic acid or glycolic acid.

From the viewpoint of keeping the pH value of the maintenance liquid constant, it is preferable that the maintenance liquid contains at least an acid of either citric acid or acetic acid and contains the salt thereof.

From the viewpoint of suppressing degradation of the water repellent film on the surface of the inkjet head, it is preferable that a pH value of the maintenance liquid is in the range of 5.0 to 6.4 at 25°C.

In addition, from the viewpoint of obtaining a high-quality image, it is more preferable that the inkjet recording method of the present invention includes a step of applying the pretreatment liquid simultaneously with or immediately before the step of ejecting the ink composition.

From the viewpoint of preventing defective ejection of the pretreatment liquid, the inkjet recording method preferably includes a step of cleaning a head for pretreatment liquid using the maintenance liquid, and more preferably, cleaning using a wiping member.

Hereinafter, the present invention, its constituent elements, and modes/embodiments for carrying out the present invention will be described in detail. In the present application, when a range is expressed from one particular value to another particular value, the one particular value and the another particular value shall be included as the lower limit value and the upper limit value.

### < 1 Summary of Ink set for Inkjet recording>

The ink set for inkjet recording of the present invention is an ink set for inkjet recording including an ink composition, a pretreatment liquid, and a maintenance liquid, wherein the pretreatment liquid contains a polyvalent metal salt, and the maintenance liquid contains an acidic component.

The "ink set" refers to a set composed of a combination of materials used for inkjet recording. The ink set of the present invention is a set including at least an "ink composition", a "pretreatment liquid", and a "maintenance liquid". In addition to these, the ink set may include an overcoat liquid.

The "overcoat liquid" is a liquid for coating an ink composition layer formed by ink landing on a base material, and the type thereof is not particularly limited. As will be described in detail later, the ink composition according to the present invention is aqueous, and in the present specification, the "ink composition" may also be simply referred to as "ink".

Since the ink composition according to the present invention has a high drying rate, it is preferably used in a base material having low permeability. The base material having low permeability includes an ink non-absorbent or ink low-absorbent base material. The ink composition according to the present invention preferably contains an aqueous solvent. As used herein, the "permeability" and "absorbency" refer to the properties of ink.

Examples of the ink non-absorbent base material include a plastic film having no ink-absorbing layer, a base material coated with a plastic, and a base material adhered with a plastic film. Examples of the plastic include polyvinyl chloride, polyethylene terephthalate, polycarbonate, polystyrene, polyurethane, polyethylene, and polypropylene.

As those coated with a plastic or adhered with a plastic film, in order to impart gas barrier properties, moisture proofness, fragrance retention, and the like, one in which one side or both sides of the film are coated with polyvinylidene chloride or a film obtained by vapor depositing a metal oxide can also be preferably used.

As the film, both unstretched films and stretched films can be preferably used.

The thickness of the base material is preferably in the range of 10 to 120µm, more preferably in the range of 12 to 60µm, in the case of a plastic film.

In addition, as an ink non-absorbent base material, metal base materials such as a tin plate or a tin-free steel plate (TFS plate, thickness: 0.1 to 0.6µm) for three-piece can use are also preferably used, and for example, it can be suitably used for a packaging material for canned foods in which a thermosetting resin is provided as a coating layer. In the packaging material for canned foods, for example, it is common to use an epoxy-phenol-based coating material or a polyester-based laminating agent on the food side, and use a polyester-based or acrylic-based thermosetting coating material on the outer side, in order to block air, water, and light and seal the food inside.

Examples of the ink low-absorbent base material include a base material provided with a coating layer for receiving ink on a surface thereof, and examples thereof include printing paper such as art paper, coated paper, and mat paper, and a base material obtained by coating a surface of a plastic film with a hydrophilic polymer, and a base material obtained by coating particles such as silica and titanium with a binder.

The ink set for inkjet recording of the present invention includes a pretreatment liquid, and thus can prevent bleeding even when printed on a base material having low permeability. In addition, by including the maintenance liquid, it is possible to prevent a defective ejection of the pretreatment liquid due to clogging of the nozzle.

### <1.1 Pretreatment liquid >

The pretreatment liquid according to the present invention contains a polyvalent metal salt.

In inkjet printing using an aqueous ink, when a base material is made of a low-permeability material, ink droplets after landing hardly permeate into the base material, so that drying by permeation does not occur, and bleeding occurs between the droplets, and the image quality is easily impaired. Therefore, a pretreatment step of applying a pretreatment liquid to a base material having low permeability is known.

As the pretreatment liquid (also referred to as "reaction liquid" or "treatment liquid"), two types of pretreatment liquids are known: one that forms a layer (ink receiving layer) that absorbs a liquid component of an ink and improves drying properties, and one that forms a layer (ink aggregation layer) that aggregates a solid component and intentionally causes thickening of the ink, thereby preventing bleeding and color unevenness between ink droplets.

The pretreatment liquid according to the present invention forms an ink aggregation layer and includes a polyvalent metal salt as a flocculant. In addition, from the viewpoint of suppressing the production of a carbonate composed of a polyvalent metal ion and carbon dioxide in the air, it is preferable to contain an acidic component. In addition, it is preferable to contain water as a solvent.

### <1.1.1 Polyvalent metal salt >

The pretreatment liquid according to the present invention contains a polyvalent metal salt The polyvalent metal salt can aggregate the anionic components (usually dispersant, coloring material, or the like) in the ink composition by salting out In addition, since the polyvalent metal salt has a low molecular weight, it easily diffuses into the aqueous ink, and dispersant or the coloring material in the aqueous ink can be aggregated at a higher speed.

The "polyvalent metal salt" according to the present invention is a compound composed of a divalent or higher polyvalent metal ion and an anion bonded to the polyvalent metal ion, and is soluble in water. When the flocculant is a polyvalent metal salt, it interacts with dispersant instantaneously, and bleeding is suppressed, and clear images without color unevenness can be obtained.

Specific examples of the polyvalent metal ion include a divalent metal ion such as Ca²⁺, Cu²⁺, Ni²⁺, Mg²⁺, Zn²⁺, and Ba²⁺, a trivalent metal ion such as Al³⁺, Fe³⁺, Cr³⁺, and Y³⁺, and a tetravalent metal ion such as Zf⁴⁺. The polyvalent metal ion may be used singly or in combination of two or more. Since the ionization tendency is large and cations are likely to be generated, it is preferable to use any one of metal ions of Ca²⁺, Mg²⁺, Zn²⁺ and Al³⁺ from the viewpoint of obtaining a highly aggregation effect. In addition, these metal ions can produce colorless and water-soluble salts, and can suppress a decrease in image saturation. In addition, Ca²⁺ or Mg²⁺ is preferable from the viewpoint of small ionic radius and ease of movement in the ink aggregation layer and the ink droplets.

Examples of the anion include Cl⁻, I⁻, Hf, SO₄²⁻, ClO³⁻, NO³⁻, HCOO⁻, CH₃COO⁻ and the like.

The type of the salt constituting the polyvalent metal salt is not particularly limited, but for example, a known salt such as a carbonate, a sulfate, a nitrate, a hydrochloride, an organic acid salt, a borate, or a phosphate, which is water-soluble and does not inhibit the effect of the present invention, can be used. Specific examples of particularly preferred polyvalent metal salts include calcium salts or magnesium salts of carboxylic acids such as calcium chloride, magnesium chloride, calcium nitrate, magnesium nitrate, calcium acetate and magnesium lactate.

The content of the polyvalent metal salt is preferably in the range of 5% by mass or less, more preferably in the range of 1 to 4% by mass, and still more preferably in the range of 2 to 3% by mass with respect to the pretreatment liquid, from the viewpoint of being capable of effectively aggregating the anionic component in the ink composition and having both image quality and hot water resistance.

The content of the polyvalent metal salt in the pretreatment liquid can be measured by a known method. For example, it can be measured by ICP emission analysis.

### <1.1.2 Acidic component >

The pretreatment liquid according to the present invention preferably contains an acidic component. When the pretreatment liquid contains an acidic component, carbon dioxide in the air is dissolved to suppress production of carbonate ions.

The acidic component is not particularly limited, and may be an inorganic acid or an organic acid. The acidic component may be used singly or in combination of two or more. Examples of the inorganic acid include hydrochloric acid, nitric acid, phosphoric acid, sulfuric acid, boric acid, and hydrofluoric acid. Examples of the organic acid include formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, sulfonic acid derivatives, glycolic acid, sulfamic acid, and pyrophosphoric acid.

Among them, the acidic component is preferably citric acid, acetic acid or glycolic acid, and more preferably citric acid and acetic acid.

The content of the acidic component is preferably in the range of 0 to 2% by mass, more preferably in the range of 0 to 1.5% by mass, and still more preferably in the range of 0 to 1% by mass, based on the total mass of the pretreatment liquid.

The water repellent film on the inkjet head has a property of being easily deteriorated by the acidic component, but the deterioration of the water repellent film can be suppressed by setting the acidic component contained in the pretreatment liquid to a relatively weak acid and setting the content to be within the above range.

The content of the acidic component is preferably 40% by mass or less, more preferably 30% by mass or less, and still more preferably 20% by mass or less with respect to the mass of the polyvalent metal salt. The acidic component also functions as a flocculant in the pretreatment liquid, but from the viewpoint of having high reactivity with the solid component of the ink, it is preferable that the polyvalent metal salt functions as a flocculant. When the content is within the above range, the polyvalent metal salt preferentially functions as a flocculant, and thus a higher-quality image can be obtained.

The content of the acidic component in the pretreatment liquid can be measured by a known method. For example, it can be measured by high performance liquid chromatography (HPLC).

### <1.1.3 Water and other additives>

The pretreatment liquid according to the present invention preferably contains water as a main solvent from the viewpoint of evaporating and scattering by drying after being coated on a base material. The water is preferably one obtained by removing as much as possible ionic impurities such as pure water such as ion-exchanged water, ultrafiltered water, reverse osmosis water, and distilled water, or ultrapure water. In addition, it is preferable to use the water sterilized by ultraviolet irradiation, addition of hydrogen peroxide, or the like, since the generation of mold and bacteria can be prevented when the pretreatment liquid is stored for a long period of time.

The content of water contained in the pretreatment liquid is preferably 30% by mass or more, more preferably 35% by mass or more, still more preferably 40% by mass or more, and particularly preferably 45% by mass or more, based on the total mass of the pretreatment liquid.

The pretreatment liquid according to the present invention may further contain a water-soluble organic solvent. By adding the organic solvent, the wettability of the pretreatment liquid with respect to the base material can be improved. As the organic solvent, the same organic solvent as that exemplified by the ink composition described below can be used. The content of the organic solvent contained in the pretreatment liquid is preferably in the range of 1 to 60% by mass, based on the total mass of the pretreatment liquid.

The pretreatment liquid according to the present invention may contain other components such as surfactant, a cross-linking agent, a fungicide, a bactericide, and fine resin particles as appropriate as long as the effects of the present invention are not impaired.

For example, known various additives such as the ultraviolet absorber described in JP S57-74193A, JP S57-87988A, and JP S62-261476A, the color fading inhibitor, various surfactants such as anionic, cationic, or nonionic described in JP S57-74192A, JP S57-87989A, JP S60-72785A, JP S61-146591A, JP H01-95091A, and JP H03-13376A, the fluorescent brightening agent, a defoamer, a lubricant such as diethylene glycol, a preservative, a thickener, an antistatic agent and the like described in JP.S59-42993A, JP S59-52689A, JP S62-280069A, JP S61-242871A, and JP H04-219266A, may be included.

### <1.1.4 Physical Properties of Pretreatment liquid>

When the pretreatment liquid according to the present invention is ejected (coated) onto a base material by an inkjet head, the pretreatment liquid preferably has a surface tension at 25°C in the range of 20 to 40mN/m, and more preferably in the range of 20 to 35mN/m. The surface tension can be measured by, for example, using an automatic surface tensiometer CBVP-Z (trade name, manufactured by Kyowa Interface Science Co., Ltd.) to confirm the surface tension when the platinum plate is wetted with ink in an environment of 25°C.

From the same viewpoint, the viscosity of the pretreatment liquid at 25°C is preferably in the range of 3 to 12mPa·s, and more preferably in the range of 3 to 10mPa-s. The viscosity can be measured by using, for example, a viscoelastic testing machine MCR-300 (trade name, manufactured by Pysica) to measure the viscosity in an environment of 25°C.

### <1.1.5 Preparation of Pretreatment liquid>

The pretreatment liquid according to the present invention can be prepared by dispersing and mixing the above components by a conventionally known method. Further, the above components are sufficiently stirred, and then filtered to remove coarse particles and foreign matters that cause clogging.

### <1.2 Maintenance liquid >

The maintenance liquid according to the present invention contains an acidic component.

In inkjet printing using an aqueous ink, when a pretreatment liquid is used, a dried matter of the pretreatment liquid precipitates on the nozzle of the inkjet head, and a defective ejection of the pretreatment liquid due to clogging of the nozzle occurs, so that the nozzle needs to be maintained. The dried matter of the pretreatment liquid includes the polyvalent metal salt itself precipitated by evaporation of water, and a carbonate produced by the reaction between carbon dioxide in the air and metal ions. The carbonate also includes a bicarbonate.

In the conventional maintenance technique, although the polyvalent metal salt itself contained in the dried matter of the pretreatment liquid can be removed, it is difficult to remove the carbonate. The maintenance liquid according to the present invention can remove not only the polyvalent metal salt but also the carbonate salt by containing the acidic component. The removable dried matter is not limited to the polyvalent metal salt and the carbonate.

### <1.2.1 Acidic component >

The maintenance liquid according to the present invention contains an acidic component. When the maintenance liquid contains an acidic component, the carbonate is dissolved in the maintenance liquid, the carbonic acid is liberated, and carbonic acid gas is generated.

The acidic component is not particularly limited, and may be an inorganic acid or an organic acid. The acidic component may be used singly or in combination of two or more. Examples of the inorganic acid include hydrochloric acid, nitric acid, phosphoric acid, sulfuric acid, boric acid, and hydrofluoric acid. Examples of the organic acid include formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, sulfonic acid derivatives, glycolic acid, sulfamic acid, and pyrophosphoric acid.

Among them, the acidic component is preferably an acid of citric acid, acetic acid or glycolic acid, and more preferably citric acid and acetic acid.

In addition, from the viewpoint of keeping the pH value of the maintenance liquid constant, it is preferable that at least one of citric acid and acetic acid is contained as the acidic component, and that a salt thereof is contained. Citric acid and acetic acid are weak acids, and the mixed solution containing the salts thereof serve as a buffer, so that the pH value can be kept constant.

The content of the acidic component is preferably in the range of 0.1 to 5% by mass, more preferably in the range of 0.3 to 4.5% by mass, and still more preferably in the range of 0.5 to 4.0% by mass, based on the total mass of the maintenance liquid.

### <1.2.2 Water and other additives>

The maintenance liquid according to the present invention preferably contains water as a main component from the viewpoint of exerting moisturizing capacity of the maintenance liquid. The content of water is preferably 50% by mass or more, more preferably 60% by mass or more, and still more preferably 70% by mass or more, based on the total mass of the maintenance liquid.

The maintenance liquid according to the present invention may further contain a water-soluble organic solvent. By adding the organic solvent, the surface tension is reduced as compared with a maintenance liquid composed only of water. Therefore, the wettability to the tube for supplying the maintenance liquid to the cap device is increased, and the supply property is improved. The wettability with respect to the nozzle of the inkjet head is also increased, and dried matter of the flocculant can be effectively removed.

As the organic solvent, the same organic solvent as that exemplified by the ink composition described below can be used. By using the same organic solvent contained in the maintenance liquid and the organic solvent contained in the pretreatment liquid or the ink composition, the compatibility is enhanced and the cleaning property is further excellent.

The content of the organic solvent contained in the maintenance liquid is preferably in the range of 3 to 49% by mass, more preferably in the range of 4 to 40% by mass, and still more preferably in the range of 5 to 30% by mass, based on the total mass of the maintenance liquid.

The maintenance liquid according to the present invention may be added with a surfactant, a preservative, a fungicide, a rust inhibitor, a coloring material, a chelating agent, and the like as needed. The addition of a surfactant reduces the surface tension of the maintenance liquid and improves the ability to remove the flocculant. Examples of the surfactant include acetylene glycol-based surfactant, silicone-based surfactant, and fluorine-based surfactant.

### <1.2.3 Physical property of Maintenance liquid >

In the present invention, the "pH value" refers to a physical property measured as follows. In other words, it is a value measured at 25°C with a pH meter using a glass electrode calibrated with a neutral phosphate standard solution and a borate standard solution as a pH standard solution according to JIS Z8802:2011. Examples of such a pH meter include "HM-41X" manufactured by DKK-TOA Corporation, and "D-51" manufactured by HORIBA, Ltd.

The pH value of the maintenance liquid according to the present invention at 25°C is preferably in the range of 5.0 to 6.4, and more preferably close to 6.4, from the viewpoint of suppressing degradation of the water repellent film on the surface of the inkjet head. Further, by controlling the pH value within the above range, it is possible to prevent the components of the cap device from being corroded or the like in addition to the water repellent film.

It is possible to prevent the ink and pretreatment liquid from remaining on the nozzle opening surface and foreign matters from adhering thereto by providing the water repellent film on the surface of the inkjet head. The water repellent film includes, for example, a water repellent material such as fluororesin particles. Although the reason is not clear, the water repellency of these water repellent materials may decrease with time due to the adhesion of the acidic solution, but the maintenance liquid is in the state of weakly acidic buffer solution, so the deterioration of the water repellency can be suppressed.

### <1.2.4 Preparation of Maintenance liquid>

The maintenance liquid according to the present invention can be prepared by dispersing and mixing the above components by a conventionally known method. Further, the above components are sufficiently stirred, and then filtered to remove coarse particles and foreign matters that cause clogging.

### <1.3 Ink composition >

The "ink composition (also simply referred to as "ink")" according to the present invention is preferably a composition containing at least a coloring material, an organic solvent, and water.

### <1.3.1 Coloring material >

The ink composition according to the present invention contains a coloring material. The coloring material is a material used for coloring, and a material soluble in water or oil is called a dye, and a material insoluble in water or oil is called a pigment Although not particularly limited, it is preferable to use a pigment as a coloring material from the viewpoint of having a property of hardly fading with respect to light, gas, or the like.

### (Pigment)

Since the pigment is resistant to fading with respect to light, gas, or the like, an image formed on a substance such as plastic using the pigment is excellent in water resistance, gas resistance, light resistance, and the like, and has good preserving property. The pigment is not particularly limited, and conventionally known pigments can be used. For example, inorganic pigments such as titanium oxide, iron oxide, and carbon black, and organic pigments such as insoluble pigments and lake pigments can be preferably used.

Titanium oxide has three crystal forms of anatase type, rutile type, and blue-kite type, and they are roughly classified into anatase type and rutile type for the general-purpose type. Although not particularly limited, a rutile type having a high refractive index and high concealability is preferable. Specific examples thereof include TR series manufactured by Fuji Titanium Industry Co., Ltd., JR series manufactured by Tayca Co., Ltd., and TIPAQUE (registered trademark) manufactured by Ishihara Sangyo Kaisha, Ltd.

As the carbon black, for example, one manufactured by a conventionally known method such as a contact method, a furnace method, or a thermal method can be used.

Although the insoluble pigment is not particularly limited, for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

Specific examples of the organic pigment that can be preferably used include the following pigments.

Examples of pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of pigment for orange or yellow include C.I. pigment orange 31, C.I. pigment orange 43, C.I. pigment yellow 12, C.I. pigment yellow 13, C.I. pigment yellow 14, C.I. pigment yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. C.I. Pigment Yellow 155 is particularly preferable in terms of the balance between color tone and light fastness.

Examples of the pigment for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of the pigment for black include C.I. pigment black 1, C.I. pigment black 6, and C.I. pigment black 7.

The pigment used in the white ink is not particularly limited, and examples thereof include C.I. pigment white pigments 6, 18, and 21, and white inorganic pigments of titanium oxide, zinc oxide, zinc sulfide, antimony oxide, magnesium oxide, and zirconium oxide. In addition to the white inorganic pigments, white organic pigments such as white hollow resin fine particles and white polymer particles can also be used.

The content of the pigment in the ink is not particularly limited, but is preferably in the range of 7 to 18% by mass with respect to the inorganic pigment, and is preferably in the range of 0.5 to 7% by mass with respect to the organic pigment.

From the viewpoint that the pigment can be stably dispersed and the preserving property of the ink composition is improved, the average particle size of the pigment dispersed in the ink is preferably 50nm or more and less than 200nm. The particle size of the pigment can be measured by a commercially available particle size measuring instrument using a dynamic light scattering method, an electrophoresis method, or the like, but the measurement by a dynamic light scattering method is easy, and can accurately measure the particle size area.

The pigment can be used by being dispersed using a disperser together with a dispersant and other additives required depending on the desired purpose.

As the disperser, a conventionally known ball mill, a sand mill, a line mill, a high-pressure homogenizer, and the like can be used. Among them, it is preferable to disperse the pigment by a sand mill because the particle size distribution becomes sharp. The material of the beads used for the sand mill dispersion is not particularly limited, but is preferably zirconia or zircon from the viewpoint of preventing generation of bead fragments and contamination of ion components. Furthermore, the bead diameter is preferably in the range of 0.3 to 3mm.

### <1.3.2 Organic solvent >

From the viewpoint of increasing the drying rate, the ink composition according to the present invention preferably contains an organic solvent, and more preferably contains a water-soluble organic solvent. Examples of the water-soluble organic solvent include alcohols, polyhydric alcohols, amines, amides, glycol ethers, and 1,2-alkanediols having 4 or more carbon atoms.

Examples of alcohols include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, and benzyl alcohol.

Examples of the polyhydric alcohol include ethylene glycol, diethylene glycol, triethylene glycol, tetraethylene glycol, polyethylene glycol having 5 or more ethylene oxide groups, propylene glycol, dipropylene glycol, tripropylene glycol, polypropylene glycol having 4 or more propylene oxide groups, butylene glycol, hexanediol, pentanediol, glycerin, hexanetriol, and thiodiglycol.

Examples of the amines include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amides include formamide, N,N-dimethylformamide, and N,N-dimethylacetamide.

Examples of glycol ethers include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of 1,2-alkanediols having 4 or more carbon atoms include 1,2-butanediol, 1,2-pentanediol, 1,2-hexanediol, and 1,2-heptanediol.

The organic solvent that is particularly preferably used is polyhydric alcohols, which can suitably suppress bleeding during high-speed printing. Specifically, ethylene glycol, diethylene glycol, triethylene glycol, tetraethylene glycol, propylene glycol, dipropylene glycol, and tripropylene glycol are preferable.

The ink composition may contain one or a combination of two or more selected from these organic solvents.

The content of the organic solvent in the ink composition is not particularly limited, but is preferably in the range of 10 to 60% by mass.

### <1.3.3 Water >

From the viewpoint of evaporating and scattering by drying, the ink composition according to the present invention preferably contains water, and the water is preferably used as a main solvent. The water is preferably one obtained by removing as much as possible ionic impurities such as pure water such as ion-exchanged water, ultrafiltered water, reverse osmosis water, and distilled water, or ultrapure water. In addition, it is preferable to use water sterilized by ultraviolet irradiation, addition of hydrogen peroxide, or the like, since the generation of mold and bacteria can be prevented when the ink composition is stored for a long period of time.

The content of water contained in the ink composition is preferably 40% by mass or more, more preferably 49% by mass or more, still more preferably 55% by mass or more, and particularly preferably 65% by mass or more, based on the total mass of the ink composition.

### <1.3.4 Pigment dispersant >

In order to disperse a pigment insoluble in water or oil in the ink composition, a pigment dispersant may be contained. Examples of such a pigment dispersant include a method of dispersing with a polymer dispersant such as a water-soluble polymer and/or a water-dispersible polymer, a method of dispersing with a surfactant of a water-soluble surfactant and/or a water-dispersible surfactant, and a method of dispersing and/or dissolving a surface-treated pigment having a hydrophilic functional group chemically and physically introduced to the surface of the pigment particles in water.

As the polymer dispersant, a polymer dispersant having an anionic group is preferable, and one having a molecular weight in the range of 4000 to 200000 can be suitably used.

Examples of the polymer dispersant include block copolymers, random copolymers and salts thereof, having a structure derived from two or more kinds of monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives, polyoxyalkylene, and polyoxyalkylene alkyl ethers.

The polymer dispersant preferably has an acryloyl group, and is preferably added by neutralizing with a neutralizing base. Here, the neutralizing base is not particularly limited, but is preferably an organic base such as ammonia, monoethanolamine, diethanolamine, triethanolamine, or morpholine. In particular, when the pigment is titanium oxide, the titanium oxide is preferably dispersed with a polymer dispersant having an acryloyl group.

As the polymer dispersant, a commercially available product can be used. For example, Joncryl (registered trademark) 67 (weight average molecular weight: 12500, acid value: 213), Joncryl 678 (weight average molecular weight: 85, acid value: 215), Joncryl 586 (weight average molecular weight: 4600, acid value: 108), Joncryl 611 (weight average molecular weight: 8100, acid value: 53), Joncryl 680 (weight average molecular weight: 4900, acid value: 215), Joncryl 683 (weight average molecular weight: 8000, acid value: 160), Joncryl 819 (weight average molecular weight: 14500, acid value: 75), Joncryl 690 (weight average molecular weight:16500, acid value: 240) (trade names, manufactured by BASF Japan Ltd.) and the like.

The addition amount of the polymer dispersant is preferably in the range of 10 to 100% by mass, and more preferably in the range of 10 to 40% by mass, based on the pigment.

It is particularly preferable that the pigment has a form of so-called encapsulated pigment in which the pigment is coated with a polymer dispersant. As a method of coating the pigment with a polymer dispersant, various known methods can be used, and for example, a phase inversion emulsification method, an acid precipitation method, or a method of dispersing the pigment with a polymerizable surfactant, supplying a monomer thereto, and coating while polymerizing are used.

A particularly preferred method is a method in which a water-insoluble resin is dissolved in an organic solvent such as methyl ethyl ketone, an acid group in the resin is partially or completely neutralized with a base, a pigment and ion-exchanged water are added and dispersed, and then the organic solvent is removed and optionally added with water to preparate.

Examples of the surfactant include anionic surfactants such as alkanesulfonates, α-olefinsulfonates, alkylbenzenesulfonates, alkylnaphthalenesulfonates, acylmethyltaurates, dialkylsulfosuccinates, alkylsulfuric ester salts, sulfated olefins, polyoxyethylene alkyl other sulfuric ester salts, alkyl phosphoric ester salts, polyoxyethylene alkyl ether phosphoric ester salts, and monoglycerite phosphoric ester salts, amphoteric surfactants such as alkylpyridium salts, alkylamino acids, and alkyldimethylbetaines, and nonionic surfactants such as polyoxyethylene alkyl ethers, polyoxyethylene alkyl phenyl ethers, polyoxyethylene alkyl esters, polyoxyethylene alkyl amides, glycerine alkyl esters, and sorbitan alkyl esters.

The addition amounts of the polymer dispersant and the surfactant to the pigment are preferably in the range of 1 to 100% by mass, and more preferably in the range of 5 to 50% by mass, based on the total weight of the pigment. When the amount is within the above range, the pigment can be stably dispersed in water.

Examples of the surface-treated pigment include -OM, -COOM, -CO-, -SO₃M, -SO₂NH₃, -RSO₃M, - PO₃HM, -PO₃M₃, -SO₃NHCOR, -NH₃, and -NR₃, as a hydrophilic functional group (wherein, M represents a hydrogen atom, an alkali metal, ammonium, or an organic ammonium, and R represents an alkyl group having 1 to 12 carbon atoms, a phenyl group which may have a substituent, or a naphthyl group which may have a substituent). These functional groups are physically and/or chemically introduced by being grafted directly to the surface of the pigment particles and/or via other groups. Examples of the polyvalent group include an alkylene group having 1 to 12 carbon atoms, a phenylene group which may have a substituent, or a naphthylene group which may have a substituent.

The surface-treated pigment is preferably surface-treated so that -SO₃M and/or -RSO₃M (M is a counterion and represents a hydrogen ion, an alkali metal ion, an ammonium ion, or an organic ammonium ion) is chemically bonded to the surface of the pigment particles by a treatment agent containing sulfur. That is, it is preferable that the pigment is dispersed in a solvent that has no active protons, has no reactivity with sulfonic acid, and in which a pigment is insoluble or poorly soluble, and then the pigment is surface-treated by amidosulfuric acid or a complex of sulfur trioxide and a tertiary amine so that -SO₃M and/or -RSO₃M are chemically bonded to the surface of the particle thereof, so that the pigment can be dispersed and/or dissolved in water.

As a surface treatment means for grafting a functional group or a salt thereof to the surface of the pigment particles directly or via a polyvalent group, various known surface treatment means can be applied. For example, a means of reacting commercially available oxidized carbon black with ozone or sodium hypochlorite solution to further oxidize the carbon black and make its surface hydrophilic (for example, JP H07-258578A, JP H08-3498A, JP H10-120958A, JP H10-195331A, and JP H10-237349A), a means for treating carbon black with 3-amino-N-alkyl-substituted pyridium bromide (for example, JP H10-195360A and JP H10-330665A), a means of dispersing an organic pigment to a solvent in which the pigment is insoluble or hardly soluble to introduce a sulfonic group into the surface of the pigment particles by a sulfonating agent (for example, JP H08-283596A, JP H10-110110A, and JP H10-110111A), and a means of dispersing an organic pigment in a basic solvent that forms a complex with a sulfur trioxide and treating the surface of the organic pigment by adding sulfur trioxide to introduce a sulfone group or a sulfonamino group (for example, JP H10-110114A). The functional group grafted to one pigment particle may be a single group or a plurality of groups.

### <1.3.5 Regin >

From the viewpoint that the ink composition can be solidified and firmly fixed on the base material, the ink composition according to the present invention may contain a water-soluble and/or water-insoluble resin. The resin may be either in a state of being dissolved in the ink composition or in a state of being dispersed in the ink composition. As the resin in a dissolved state, the polymer dispersant described above can be used.

### (Water-insoluble resin particle)

The resin used in the ink composition according to the present invention is preferably dispersed in the ink composition in the form of fine particle, and further preferably water-insoluble resin fine particle. The water-insoluble resin fine particle used in the present invention is a fine particle dispersion of a water-insoluble resin capable of receiving an ink composition and exhibiting solubility or affinity for the ink composition.

The water-insoluble resin fine particle is water-insoluble in nature, but has a form in which a resin is dispersed in an aqueous medium as micro fine particle, and is a non-water soluble resin which is forcibly emulsified by using an emulsifier or the like and dispersed in water, or a non-water soluble resin which can be self-emulsified by introducing a hydrophilic functional group into the molecule to form a stable aqueous dispersion by itself without using an emulsifier or a dispersion stabilizer. These resins are usually used in emulsified and dispersed form in water or water/alcohol mixed solvent

The resin used is preferably at least a polyester resin, a polyurethane resin, a polyacrylic resin, or a composite resin of a polyurethane resin and a polyacrylic resin.

For example, when resin fine particles are contained in the pretreatment liquid, it is preferable that the ionicity of the resin fine particles of the pretreatment liquid is nonionic or cationic, and the ionicity of the resin fine particles of the ink composition composed of the polyester resin, the polyurethane resin, the polyacrylic resin, or the composite resin of the polyurethane resin and the polyacrylic resin is nonionic or anionic.

Among them, the resin fine particle used in the ink composition preferably contain an acid structure, and can be dispersed in water even if the addition amount of the surfactant is small, so that the water resistance of the ink composition layer is improved. This is called a self-emulsifying, which means that the urethane-based resin can be dispersed and stabilized in water only by the molecular ionicity without using the surfactant. Examples of the acid structure include an acid group such as a carboxy group (-COOH), a sulfonic acid group (-SO₃H), and the like. The acid structure may be present in the side chain or terminal in the resin.

Some or all of the above acid structures are preferably neutralized. By neutralizing the acid structure, the water dispersibility of the resin can be improved. Examples of the neutralizer for neutralizing the acid structure are preferably organic amines, and it is preferable to use organic amines such as trimethylamine, triethylamine, tripropylamine, tributylamine, N-methyldiethanolamine, and triethanolamine.

As the resin fine particle used in the ink composition, a commercially available product may be used. Examples of the commercially available product of the resin fine particle are listed below by type of resin.

### <Polyester>

PESRESIN A-110F, A-520, A-613D, A-615GE, A-640, A-645GH, and A-647GEX manufactured by Takamatsu Oil & Fat Co., Ltd., and Elitel (registered trademark) KA-5034, KA-5071S, KA-1449, KA-0134, KA-3556, KA-6137, KZA-6034, KT-8803, KT-8701, KT-9204, KT-8904, KT-0507, and KT-9511 manufactured by Unitika Ltd.

### <Urethane base >

NeoRez (registered trademark) R-967, R-600, and R-9671 manufactured by Kusumoto Chemicals, Ltd., and W-6061, W-5661, and WS-4000 manufactured by Mitsui Chemicals, Inc.

### <Acryl base>

NeoCryl (registered trademark) A-1127 manufactured by Kusumoto Chemicals, Ltd. and Mowinyl (registered trademark) 6899D, 6969D, 6800, and 6810 manufactured by Japan Coating Resin Co., Ltd., and TOCRYL (registered trademark) W-7146, W-7150, and W-7152 manufactured by Toyochem Co., Ltd.

From the viewpoint of ensuring preservation stability and ejection stability of the ink composition, the average particle size of the resin fine particle is preferably in the range of 5 to 400nm, and more preferably in the range of 50 to 200nm.

The content of the resin fine particles in the ink is not particularly limited, but is preferably in the range of 2 to 10% by mass, and more preferably in the range of 2 to 5% by mass.

### <1.3.6 Other additives>

The ink composition according to the present invention may contain a surfactant, various known additives as needed in accordance with objectives for improving various performances of injection stability, printhead and ink cartridge compatibility, preservation stability, image preserving property, and others.

In addition, a surfactant may be contained in the ink composition. Accordingly, it is possible to improve the ink-injection stability and control the spread of the droplet (dot diameter) landed on the recording medium.

The surfactant which can be used in the ink composition according to the present invention can be used without any particular limitation, but when the other constituent of the ink composition contains an anionic compound, the ionicity of the surfactant is preferably anionic, nonionic, or betaine type. In particular, in the present invention, when an alkaline component is contained in an surfactant such as an anionic surfactant, the aggregation property of the pigment is lowered and the fine resin particles themselves are easily aggregated, so it is preferable that the surfactant is nonionic.

In the present invention, fluorine-based or silicone-based surfactants having a high-static surface tension reducing ability, anion surfactants such as dioctyl sulfosuccinate having a high-dynamic surface tension reducing ability, polyoxyethylene alkyl ethers and polyoxyethylene alkyl phenyl ethers having relatively low molecular weights, acetylene glycols, Pluronic (registered trademark) type surfactant, and nonionic surfactant such as sorbitan derivatives are preferably used. It is also preferable to use a fluorine-based or silicone-based surfactant in combination with a surfactant having a high-dynamic surface tension reducing ability.

The content of the surfactant in the ink composition is not particularly limited, but is preferably in the range of 0.1 to 5.0% by mass.

In the ink composition used in the present invention, in addition to the above, various known additives such as a pH adjusting agent, a polyolefin wax, a preservative, a fungicide, a rust inhibitor, a chelating agent, a polysaccharide, a viscosity adjusting agent, a specific resistance adjusting agent, a film forming agent, an ultraviolet absorber, an antioxidant, an antifading agent, and an antimold agent can be appropriately selected and used as needed, and for example, oil droplet fine particles such as liquid paraffin, dioctyl phthalate, tricresyl phosphate, and silicone oil, the ultraviolet absorbers described in JP S57-74193A, JP S57-87988A, JP S62-261476A, and the like, the antifading agents described in JP S57-74192A, JP S57-87989A, JP S60-72785A, JP S61-146591A, JP H01-95091A, JP H03-13376A, and the like, and fluorescent whitening agents described in JP S59-42993A, JP S59-52689A, JP S62-280069A, JP S61-242871A, JP H04-219266, and the like, in accordance with objectives for improving various performance of injection stability, printhead and ink cartridge compatibility, preservation stability, image preserving property, and others.

Examples of the pH adjusting agent include potassium dihydrogen phosphate, disodium hydrogen phosphate, sodium hydroxide, lithium hydroxide, potassium hydroxide, ammonia, diethanolamine, triethanolamine, triisopropanolamine, potassium carbonate, sodium carbonate, and sodium hydrogen carbonate.

Examples of the polyolefin wax include waxes prepared from olefins such as ethylene, propylene, and butylene or derivatives thereof and copolymers thereof, and specific examples thereof include polyethylene waxes, polypropylene waxes, and polybutylene waxes. As the polyolefin wax, commercially available waxes can be used, and specific examples thereof include Nopcoat PEM17 (trade name, manufactured by San Nopco Ltd.), CHEMIPEARL (registered trademark) W4005 (trade name, manufactured by Mitsui Chemicals, Inc.), AQUACER (registered trademark) 515, and AQUACER (registered trademark) 593 (trade names, manufactured by BYK-Chemie Japan Co., Ltd.).

The addition of the polyolefin wax is preferable from the viewpoint of improving the slipperiness against physical contact of an image formed on a base material having low permeability, and improving the rubbing resistance of the image. The content of the polyolefin wax is preferably in the range of 0.01 to 10% by mass, and more preferably in the range of 0.05 to 1% by mass, based on the total mass of the ink composition.

Examples of the preservative and fungicide include sodium benzoate, sodium pentachlorophenol, sodium 2-pyridinethiol-1-oxide, sodium sorbate, sodium dehydroacetate, and 1,2-dibenzothiazolin-3-one. Commercially available products include Proxel XL2 and Proxel GXL (trade names, manufactured by Avecia), and Denicide (trademark registration) CSA and NS-500W (trade names, manufactured by Nagase Chemtex Corporation).

Examples of the rust inhibitor include benzotriazole and the like.

Examples of the chelating agent include ethylenediaminetetraacetic acid and salts thereof (such as sodium dihydrogen ethylenediaminetetraacetic acid salt).

### <1.3.7 Physical property of Ink composition>

From the viewpoint of the image quality, the surface tension at 25°C of the ink composition according to the present invention is preferably in the range of 20 to 40mN/m, and more preferably in the range of 20 to 35mN/m. The surface tension can be measured by, for example, using an automatic surface tensiometer CBVP-Z (trade name, manufactured by Kyowa Interface Science Co., Ltd.) to confirm the surface tension when the platinum plate is wetted with ink in an environment of 25°C.

In addition, from the viewpoint of the image quality, the viscosity at 25°C of the ink composition according to the present invention is preferably in the range of 1 to 40mPa·s, and more preferably in the range of 2 to 10mPa·s. The viscosity can be measured using, for example, a viscoelastic testing machine MCR-300 (trade name, manufactured by Pysica).

### <2 Inkjet recording method>

The inkjet recording method of the present invention is an inkjet recording method for recording using the ink set for inkjet recording of the present invention, and includes a step of applying a pretreatment liquid simultaneously with or immediately before the step of ejecting an ink composition.

By including a step of applying a pretreatment liquid immediately before the step of ejecting an ink composition, bleeding can be prevented even when printed on a base material having low permeability, and a high-quality image can be obtained. Further, by using the ink set for inkjet recording, for example, a step of applying a pretreatment liquid to the surface of a base material having low permeability and a step of ejecting an ink composition can be performed efficiently and continuously by using one inkjet printer.

Specifically, the inkjet recording method of the present invention is more preferably an image forming method including a step of applying a pretreatment liquid to a surface of a base material having low permeability (also referred to as a "pretreatment liquid applying step"), a step of drying the pretreatment liquid to form a pretreatment layer (also referred to as a "pretreatment liquid drying step"), a step of ejecting an ink composition onto the pretreatment layer by an inkjet method (also referred to as an "ink composition ejection step"), and a step of drying the ink composition to form an ink layer (also referred to as an "ink composition drying step"). Here, the step of applying the pretreatment liquid and the step of ejecting the ink composition may be performed simultaneously, or the step of applying the pretreatment liquid may be performed immediately before the step of ejecting the ink composition, but from the viewpoint of obtaining a high-quality image, they are preferably performed at the same time.

In addition, when the pretreatment liquid according to the present invention is used, a dried matter of the pretreatment liquid is precipitated on the nozzle of the inkjet head, and a defective ejection of the pretreatment liquid due to clogging of the nozzle occurs, so that the nozzle needs to be maintained. Therefore, the inkjet recording method of the present invention preferably includes a step of cleaning a head for pretreatment liquid for applying the pretreatment liquid with a maintenance liquid according to the present invention (also referred to as a "maintenance step").

The step of cleaning with a maintenance liquid means that the maintenance liquid according to the present invention is applied to a head for pretreatment liquid, and dirt, foreign matter, dried matter, and the like caused by the pretreatment liquid are removed. The head for pretreatment liquid refers to a head that ejects the pretreatment liquid, and is a head that ejects only the pretreatment liquid.

### <2.1 Pretreatment liquid applying step>

The pretreatment liquid applying step is a step of applying the pretreatment liquid on a recording medium of the low-absorbent base material or the non-absorbent base material. The method of applying the pretreatment liquid onto the recording medium is not particularly limited, but is preferably an inkjet method described below. In the inkjet method, since the pretreatment liquid can be applied only to the ink applied area, it is possible to prevent cloudiness caused by applying the pretreatment liquid to the ink non-applied area. Further, as will be described below, when the base material to be used is a metal base material or the like, it is preferable to dispose the metal base material on the conveyance belt and apply and form the pretreatment layer while conveying the belt, or to use a flat-bed typed printer, in which the base material is fixed, to form the pretreatment layer.

### <2.2 Pretreatment liquid drying step>

The pretreatment liquid drying step is a step of drying the pretreatment liquid applied on a recording medium of the low-absorbent base material or the non-absorbent base material to form a pretreatment layer. However, this step can be omitted, and the ink composition ejection step may be continuously performed immediately after the pretreatment liquid applying step. Further, in the case where the ink composition ejection step is continuously performed in this manner or the case where the ink composition ejection step is performed simultaneously with the pretreatment liquid applying step, drying of the pretreatment liquid is performed together with drying of the ink composition.

Drying of the pretreatment liquid is preferably performed drying under such a condition that water, a water-soluble organic solvent, and the like, which are solvent components of the pretreatment liquid, are removed. The drying temperature of the pretreatment liquid is preferably, for example, in the range of 50 to 100°C. The drying time of the pretreatment liquid is preferably in the range of, for example, 3 to 30 seconds.

Drying of the pretreatment liquid may be performed using, for example, a non-contact heating type drying apparatus such as a drying furnace or a hot air blower, or a contact heating type drying apparatus such as a hot plate or a heat roller.

The drying temperature can be obtained by measuring any one selected from (a) an ambient temperature such as a furnace temperature or a hot air temperature when a non-contact heating type drying apparatus such as a drying furnace or a hot air blower is used, (b) a temperature of a contact heating part when a contact heating type drying apparatus such as a hot plate or a heat roller is used, or (c) a surface temperature of a surface to be dried, during the entire period of drying of a pretreatment liquid, and it is more preferable to measure (c) a surface temperature of the surface to be dried as a measurement location.

The thickness of the obtained pretreatment layer is preferably in the range of 0.3 to 3.0µm, more preferably in the range of 0.5 to 2µm. When the thickness is 0.3µm or more, it is easy to increase the adhesion of the image and the laminate strength while suppressing bleeding of the ink. Further, when the thickness is 3.0µm or less, since it is possible to reduce the deformation stress due to water and heat, the adhesion of the image and the strength in the case of laminating are less likely to be impaired.

### <2.3 Ink composition ejection step>

The ink composition ejection step is a step of ejecting the ink composition by an inkjet method at the same time as or immediately after forming the pretreatment layers on a recording medium of the low-absorbent base material or the non-absorbent base material.

The inkjet method is not particularly limited, and a printer including an inkjet head loaded with an ink composition can be used. Specifically, based on the digital signal, the ink composition is ejected as droplets from the nozzle of the inkjet head, and the droplets can be landed on the pretreatment layer of the base material for printing.

The inkjet head may be an inkjet head of either an on-demand system or a continuous system. Examples of the inkjet head of the on-demand system include electro-mechanical conversion systems including single cavity, double cavity, vendor, piston, share mode, and shared wall types, and electro-thermal conversion systems including thermal inkjet and bubble jet types ("Bubble Jet" is a registered trademark of Canon Inc.).

Among the inkjet heads above, it is preferable to use an inkjet head in which a piezoelectric element is used as an electro-mechanical conversion element used in an electro-mechanical conversion system (also referred to as a piezo-type inkjet head).

The inkjet head may be an inkjet head of either a scanning system or a single-pass system, but is preferably a single-pass system. For the single-pass system, it is preferable to use an inkjet head of a line-head system.

The inkjet head of the line-head system is an inkjet head with a length equal to or greater than the width of the printing range. As the inkjet head of the line head system, one head that is equal to or larger than the width of the printing range may be used, or a plurality of heads may be combined to be equal to or larger than the width of the printing range.

Further, a plurality of heads may be arranged side by side so that their nozzles are in a staggered arrangement, and the resolution of the heads as a whole may be increased.

The conveyance speed of the recording medium of the low-absorbent base material or the non-absorbent base material can be set, for example, in the range of 1 to 120m/min. The higher the conveyance speed, the higher the image forming speed. According to the present invention, it is possible to obtain a high-definition image with high ink fixation even at a very high linear velocity of a linear velocity of 50 to 120m/min that is applicable to an inkjet image forming process of a single-pass system.

### <2.4 Ink composition drying step>

The ink composition drying step is a step of drying the ink composition landed on the recording medium of the low-absorbent base material or the non-absorbent base material. When the pretreatment liquid drying step is omitted, the pretreatment liquid is also dried collectively in the ink composition drying step.

Drying of the ink composition mainly removes water, water-soluble organic solvent, and the like, which are solvent components of the ink composition, and at the same time, the polyvalent metal salt according to the present invention is dried at a temperature equal to or higher than the thermal decomposition temperature and thermally decomposed. The upper limit of the drying temperature is preferably 220°C or lower from the viewpoint of achieving both the thermal decomposability of the flocculant and the stability of the ink composition. The drying time of the ink is controlled by at least the time at which the polyvalent metal salt thermally decomposes. The decomposition time is appropriately selected depending on the type of the polyvalent metal salt to be selected, and can be appropriately determined from the viewpoint of the degree of the thermal decomposition to obtain the effect of the present invention and the productivity.

Drying of the ink composition can be performed in the same manner as the drying of the pretreatment liquid described above.

### <2.5 Maintenance step>

The maintenance step (method) is a step of cleaning the head for pretreatment liquid for applying the pretreatment liquid using the maintenance liquid according to the present invention. The maintenance method is not particularly limited, and a known method can be used. Examples thereof include a method of removing dried matter on the nozzle surface of the head with a wiping member, a method of covering the nozzle surface of the head with a head moisturizing cap (also referred to as a "cap") in which the maintenance liquid is supplied to moisturize and removing the dried matter, a method of immersing the nozzle part of the head in the maintenance liquid, a method of flowing the maintenance liquid through the head and cleaning the same, and the like. These methods may be used singly or in combination.

### <2.5.1 Maintenance step by wiping >

Among the above methods, a method of cleaning with a wiping member is preferable. In the present invention, the "wiping" refers to the removal of dried matter precipitated on the nozzle surface by applying any force in a contact or non-contact manner, and the "wiping member" refers to a component, a device, or the like itself used for wiping, or the materials constituting thereof.

As such a cleaning method, for example, the nozzle surface can be wiped by using an absorber containing a maintenance liquid as a wiping member and applying a pressing load by pressing the wiping member against the nozzle surface of the head by a pressing means or the like. At this time, the wiping member may or may not directly contact the head. Further, the above wiping means may be performed after the maintenance liquid is sprayed onto the nozzle surface by a spraying means of an inkjet recording head or the like. In addition, the nozzle surface of the head may be covered with a cap to which a maintenance liquid is supplied, to soak the dried material, and then the above wiping means may be performed.

As the wiping member that directly contacts the head, it is preferable that the wiping member absorbs the maintenance liquid easily and has a hardness lower than that of at least the nozzle surface of the head, and that the wiping member hardly damages the water repellent film. Examples of such a member include polyester, acrylic, polyamide, and polyurethane. These members may form a woven or non-woven fabric. In particular, it is more preferable that the member is highly absorbent of water and easily absorbs liquid even when pressing force at the time of contact is low. The shape is not particularly limited, and known shapes can be used.

In addition, from the viewpoint that the nozzle is not easily damaged, a method of wiping without directly contacting the nozzle is more preferable. As such a method, for example, there is a method in which a maintenance liquid layer is formed in a gap between a nozzle surface and a wiping member, and cleaning is performed by movement of the maintenance liquid layer (JP H10-315487A).

In the above process, the wiping member is preferably an elastic member having a maintenance liquid absorbency, and a member having elasticity and a member having a maintenance liquid absorbing property may be bonded to each other.

The member having a maintenance liquid absorbency is preferably a polymer porous body, more preferably a foamed formal resin or a thermal sinter type polymer porous body, and examples thereof include low-density polyethylene, high-density polyethylene, polypropylene, polymethyl methacrylate, polystyrene, acrylonitrile-based polymer, ethylene-vinyl acetate copolymer, fluororesin, and phenolic resin. A chamois skin, a nonwoven fabric, or the like can be used as long as it has absorbency. The elastic member is preferably rubber or the like, and may be a plate spring or an elastic plastic.

In addition to the above, as a method of wiping without directly contacting the nozzle, there are a method of spraying a maintenance liquid on a nozzle surface and then spraying air and cleaning (JP 4937785B2), a method of removing the maintenance liquid on the nozzle surface by sucking, and the like.

### <3 Inkjet recording apparatus >

An inkjet recording apparatus of the present invention is characterized by using an inkjet recording method of the present invention.

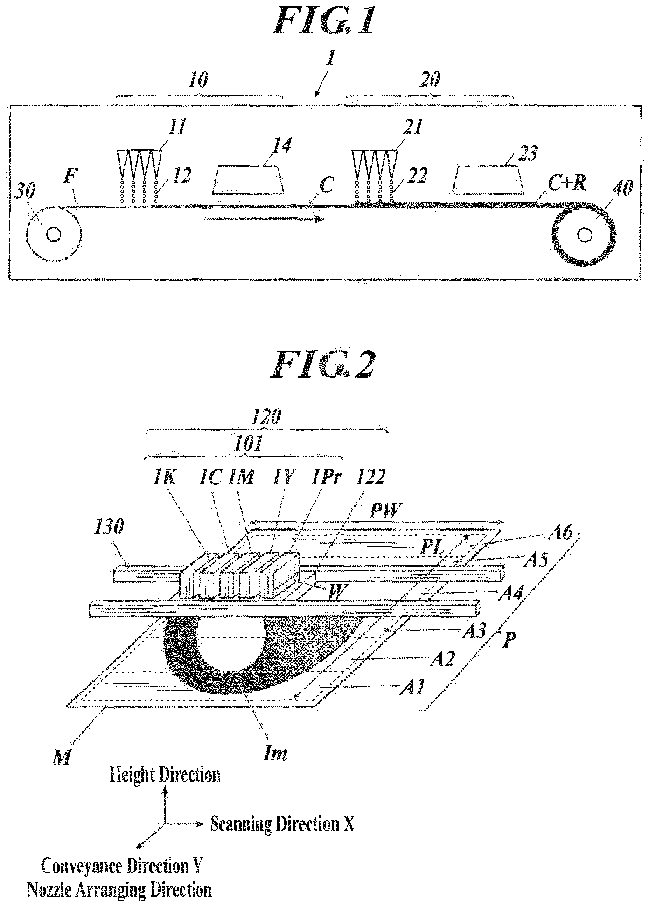

FIG. 1 is a schematic diagram showing a preferred example of the inkjet recording apparatus according to the present invention. However, the present invention is not limited thereto, and for example, in an inkjet recording apparatus 1 shown in FIG. 1, a first dryer 14 may be omitted and an inkjet head 11 and an inkjet head 21 may be adjoined to each other.

The inkjet recording apparatus 1 is mainly composed of a pretreatment liquid applicator 10 and an ink composition ejection unit 20. In the pretreatment liquid applicator 10, a pretreatment layer C is formed on a base material F, and an ink composition layer R is formed by the ink composition ejection unit 20.

Specifically, a pretreatment liquid droplet 12 is ejected from the inkjet head 11 onto the base material F fed out from a feeding roller 30, thereby forming a pretreatment layer C. Subsequently, the pretreatment layer C is dried by a first dryer 14. Note that the pretreatment liquid applicator 10 shown in FIG. 1 is an inkjet head 11, but it is not limited thereto, and may be a roll coater or the like.

Next, an ink composition droplet 22 is ejected from the inkjet head 21 onto the pretreatment layer C to form the ink layer R, a second dryer 23 dries the ink layer R at a temperature equal to or higher than the thermal decomposition temperature of the flocculant according to the present invention, and then, a winding roller 40 winds the base material F on which the pretreatment layer C and the ink composition layer R are formed, thereby obtaining an image recorded matter.

Although FIG. 1 shows a case where the base material F is a film base material, in the case of a metal base material or the like, the metal base material can be disposed on the conveyance belt, and the pretreatment layer C and the ink composition layer R can be applied and formed in one pass while the belt is conveyed.

As an apparatus other than the inkjet recording apparatus shown in FIG. 1, a flatbed-type printer is preferably used for application of a pretreatment liquid and ejection of an ink composition. In the flatbed-type printer, a base material is fixed, and inkjet head can be moved in a main scanning direction and a sub scanning direction intersecting the main scanning direction, and the flatbed-type printer can print without conveying the base material. For metal base materials such as a tinplate, it is preferable to use a flatbed-type printer that does not need to convey the base material because roll to roll conveyance is not possible, as is the case with resin film base materials.

As such a flatbed-type printer, a printer described in FIG. 1 of JP 2013-74161A or a printer described in FIG. 1 of JP 2017-177578A can be used as an example.

Further, in FIG. 1, the apparatus is configured to eject the ink composition after applying the pretreatment liquid onto the base material, but the apparatus may be configured to apply the pretreatment liquid and eject the ink composition at the same time, or a inkjet recording apparatus of two-liquid system may be used.

The two-liquid system is a system including a droplet ejecting unit having one or more ejection ports for ejecting an ink composition and one or more ejection ports for ejecting a pretreatment liquid, and the inkjet recording apparatus of two-liquid system is a recording apparatus in which droplets of an ink composition and droplets of a pretreatment liquid are applied to a surface of recording medium and coalesced on the surface from the droplet ejecting unit to form images. By using such an apparatus, the application of the pretreatment liquid and the ejection of the ink composition can be performed simultaneously.

An inkjet recording apparatus of two-liquid system can be used without any particular limitation, and may further include, for example, a control unit that controls an ink application amount and a treatment liquid application amount in the droplet ejecting unit.

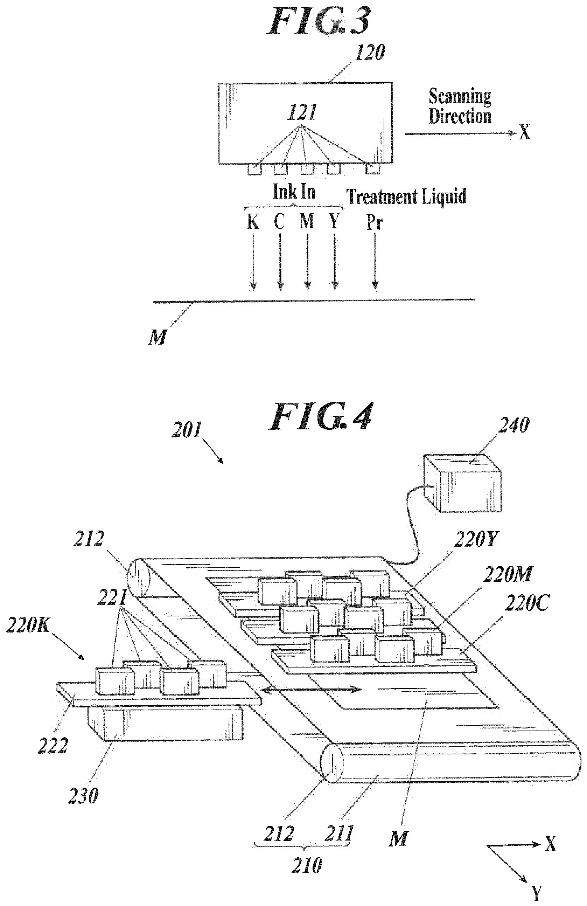

As an inkjet recording apparatus of the present invention, the droplet ejecting unit may adopt either a scan type or a line type. FIG. 2 shows a preferred example of a droplet ejecting unit adopting a scan type. The droplet ejecting unit 120 has a head 1Pr for the pretreatment liquid and heads 1Y, 1M, 1C, and 1K corresponding to the ink compositions of the respective colors, and each head has a plurality of the nozzles (indicated as 121 in FIG. 3). In the droplet ejecting unit 120, the nozzle corresponds to an ejection port, and minute droplets are ejected from these nozzles by applying an appropriate pressure to the ink composition and the pretreatment liquid.

In the case of the droplet ejecting unit adopting a line type, the droplet ejecting unit has a length equal to or larger than the print area width PW of the entire print area P with respect to a recording medium M, and the head 1Pr for the pretreatment liquid and the heads 1Y, 1M, 1C, and 1K corresponding to the ink compositions of the respective colors are arranged in order along the conveyance direction Y so as to be parallel to the print area width PW. The arrangement of the head 1Pr for the pretreatment liquid may be in front of or behind the heads of the ink compositions of the respective colors.

In the droplet ejecting unit adopting a line type, one head unit 101 (set of a head 1Pr and heads 1Y, 1M, 1C, and 1K) having equal to or larger than the print area width PW may be used, or a plurality of head units 101 may be combined to be equal to or larger than the printing area width PW.

Further, a plurality of head units may be arranged side by side so that their nozzles are staggered, and the resolution of the droplet ejecting unit may be increased as a whole of the heads. In addition, a plurality of such droplet ejecting units may be arranged in parallel along the conveyance direction Y of the recording medium.

An inkjet recording apparatus of the present invention preferably further includes a device for cleaning the head for pretreatment liquid using the maintenance liquid according to the present invention. Such a device is not particularly limited, and a conventionally known maintenance device can be used. Among them, a device having a wiping member is preferable. The wiping member is not particularly limited, and it is preferable to use a wiping member used in the aforementioned maintenance step by wiping.

In addition, a maintenance method of an inkjet recording apparatus of the present invention refers to a method of cleaning a head for pretreatment liquid in the inkjet recording apparatus using a maintenance liquid according to the present invention. The method of cleaning is not particularly limited, and the method described in the aforementioned "maintenance step" can be used.

FIG. 4 shows a preferred example of an inkjet recording apparatus including a device for cleaning with a maintenance liquid. The inkjet recording apparatus 201 includes a conveyor 210, head units 220Y, 220M, 220C, and 220K (hereinafter, also referred to as a head unit 220 when it is not distinguished from each other), a maintenancer 230 (wiping unit), a control unit 240, and the like.

A conveyor 210 includes a conveying belt 211 and a pair of conveyance rollers 212. The conveyance roller 212 rotates about a rotation axis parallel to the X direction of FIG. 4 by driving of a conveyance motor which is not shown. The conveyance belt 211 is an annular belt whose inner side is supported by a pair of conveyance rollers 212, and is circularly moved as the conveyance roller 212 rotates. The inkjet recording apparatus 201 performs a conveyance operation of conveying a recording medium M in the moving direction of the conveyance belt 211 (the conveyance direction: Y-direction in FIG. 4) by circularly moving of the conveyance belt 211 at a speed corresponding to the rotation speed of the conveyance roller 212 while the recording medium M is placed on the conveyance belt 211. Various media such as papers, metals, films, fabrics, and the like may be used as the recording medium M.

The head unit 220 records an image on a recording medium M by ejecting ink from the nozzle on the recording medium M conveyed by the conveyance belt 211, based on the image data. In an inkjet recording apparatus 201 of the present embodiment, four head units 220Y, 220M, 220C, and 220K corresponding to four colors of ink of yellow (Y), magenta (M), cyan (C), and black (K) are arranged in order from the upstream side in the conveyance direction of the recording medium M at predetermined intervals. The number of the head units 220 may be 3 or less, or 5 or more.

As shown in FIG. 4, each head unit 220 is independently movable in the X-direction. Thus, the nozzle opening surface 221a (not shown) can be moved to a position opposite to a maintenancer 230 when the image forming process is not performed. FIG. 4 shows that the head unit 220K moves in the X-direction and is opposed to a maintenancer 230. Hereinafter, the position of the head unit 220 when the ink composition is ejected for image forming is also referred to as the ink composition ejection position, and the position opposite to a maintenancer 230 is also referred to as the maintenance position.

A maintenancer 230 is disposed at a position where the nozzle opening surface 221a can be maintained when the head unit 220 moves in the X-direction. A maintenancer 230 may be provided separately for each head unit 220 or all head units 220 may be maintained by moving a single maintenancer 230 in the Y-direction.

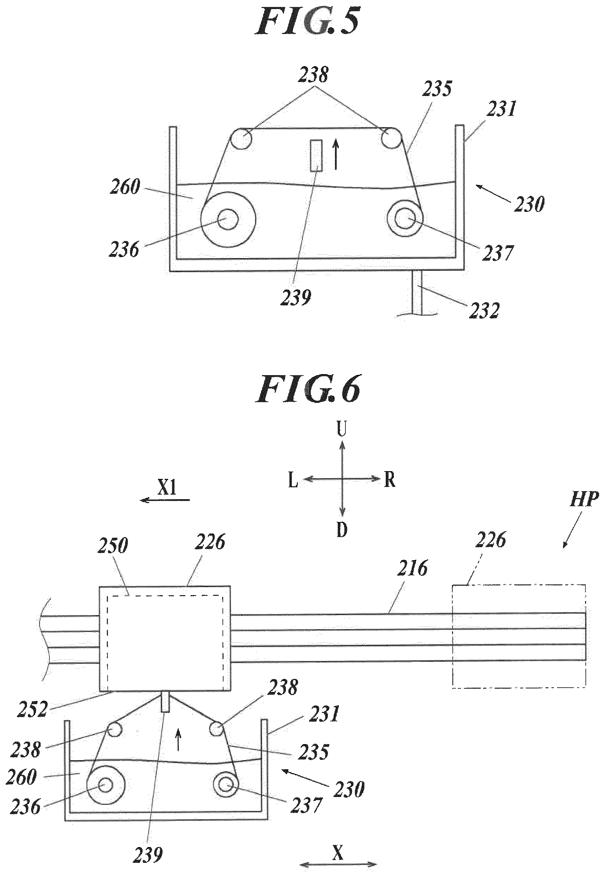

FIG. 5 shows a preferred example of a maintenancer 230. The maintenancer 230 includes a maintenance liquid tank 231 for storing a maintenance liquid 260. The maintenance liquid tank 231 is connected to a first waste liquid flow path 232. The maintenancer 230 includes a sheet-like wiping member 235, a supply roller 236, a winding roller 237, two guide rollers 238, and a pressing member 239. The member used as a wiping member 235 is not particularly limited, and the above-described wiping member may be used, but is preferably a porous sheet or the like. The wiping member 235 is fed by being unwound from the supply roller 236, and is wound up by the winding roller 237 via the guide roller 238. The supply roller 236 is immersed in the maintenance liquid 260 in the maintenance liquid tank 231, so that the maintenance liquid 260 is supplied so as to adhere to the wiping member 235. In this way, the maintenance liquid tank 231 functions as a maintenance liquid supply unit that stores the maintenance liquid 260 and supplies the maintenance liquid 260 to the wiping member 235. The winding roller 237 is also immersed in the maintenance liquid 260 in the maintenance liquid tank 231. Accordingly, the maintenance liquid tank 231 may include a waste liquid of the maintenance liquid 260. The pressing member 239 is configured to be movable above the two guide rollers 238. Thus, the maintenancer 230 is a winding type maintenance device using a sheet-like wiping member 235. As the maintenance liquid 260, a maintenance liquid according to the present invention is used.

In FIG. 5, both the supply roller 236 and the winding roller 237 are disposed in the maintenance liquid tank 231. However, it may be configured such that only the supply roller 236 is disposed in the maintenance liquid tank 231 and the winding roller 237 is disposed within a separately prepared waste liquid tank or above the waste liquid tank. In addition, it may be configured such that a waste liquid tank is prepared in place of the maintenance liquid tank 231, at least the winding roller 237 is disposed outside the waste liquid tank, and the maintenance liquid 260 is supplied to a wiping member 235 by a separately prepared maintenance liquid application apparatus or a maintenance liquid ejection apparatus.

As shown in FIG. 6, a carriage 226 is configured to be slidable along a guide rail 216 and is movable in the X-direction. The carriage 226 is equipped with an inkjet head 250, so that the inkjet head 250 is movable in the X-direction. A maintenancer 230 is disposed below the carriage 226.

As the carriage 226 moves from the home position HP to the left-direction X1, a pressing member 239 of the maintenancer 230 moves upward. As a result, a nozzle surface 252 of the inkjet head 250 contacts a wiping member 235. At this time, when the inkjet head 250 moves, the nozzle surface 252 is wiped. Alternatively, when the supply roller 236 and the winding roller 237 are rotated, a wiping member 235 is moved to perform a wiping operation. Note that the wiping operation is not limited to this, as long as the inkjet head 250 and the wiping member 235 of a maintenancer 230 move relatively. For example, a maintenancer 230 may be configured to move.

### «4 Image recorded matter >

The image recorded matter recorded by the ink for inkjet recording and the inkjet recording method of the present invention preferably have a base material, a pretreatment layer formed on the base material using the pretreatment liquid, and an ink composition layer formed on the pretreatment layer using the ink composition.

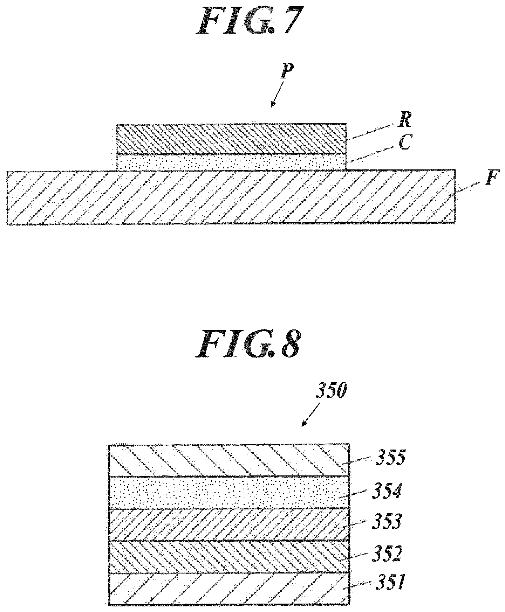

As shown in FIG. 7, in the image recorded matter P, a base material F is applied a pretreatment liquid according to the present invention by a roll coater or by ejecting the pretreatment liquid from a inkjet head to form a pretreatment layer C. The ink composition layer R is formed by ejecting the ink composition from the inkjet head at a position where the pretreatment layer C is fixed and fixing.

The above configuration represents a minimum configuration, and another functional layer may be formed between the base material and the pretreatment layer, or a non-absorbent film base material or the like may be bonded to an upper layer of the ink composition layer via, for example, a laminate adhesive layer. At least a configuration in which the pretreatment layer and the ink composition layer are in contact with each other is essential.

One example of the image recorded matter in the present invention is an image recorded matter using at least the pretreatment liquid and the water-ink composition according to the present invention, wherein the recording medium is not particularly limited, but is preferably a recording medium made of a non-absorbent material (hereinafter, referred to as a "non-absorbent recording medium").

In the present invention, the thickness of the recording medium is appropriately selected according to the type of the recording medium. When the recording medium is a plastic film, the thickness of the recording medium is preferably in the range of 10 to 120µm, more preferably in the range of 12 to 60µm. When the recording medium is a metal recording medium, the thickness of the recording medium is preferably in the range of 0.05 to 0.5mm, more preferably in the range of 0.1 to 0.3mm. When the recording medium is a leather base material, the thickness of the recording medium is preferably in the range of 1 to 5mm, more preferably in the range of 1 to 3mm.

As the non-absorbent recording medium, for example, known plastic films can be used. Specific examples include polyester films such as polyethylene terephthalate, polyethylene films, polypropylene films, polyamide-based films such as nylon, polystyrene films, polyvinyl chloride films, polycarbonate films, polyacrylonitrile films, and biodegradable films such as polylactic acid films. In order to impart gas barrier properties, moisture proofness, fragrance retention, and the like, one in which one side or both sides of the film are coated with polyvinylidene chloride or a film obtained by vapor depositing a metal oxide can also be preferably used. As the non-absorbent film, both unstretched films and stretched films can be preferably used.

Examples of the non-absorbent recording medium include a leather base material. The leather used in the printing applications is generally a cowhide. The cowhide is usually tanned using chromium compounds to add durability. It is common to apply an acryl-based or urethane-based white pigment coating material to the tanned leather to form a recording medium.

In addition to these, examples of the non-absorbent recording medium include a recording medium made of metals and inorganic compounds such as glasses. For example, it is preferably used for packaging materials for retort foods in which a thermosetting resin is provided as a coating layer on a metal recording medium. Such packaging materials for retort foods are made of overlaid (laminated) films of thermoplastic resin layers, for example, polypropylene on the food side, polyester air, water, and light on the outside, and to seal and the food inside, and aluminum foil layers in order to block air, water, and light, and to seal the food inside.

FIG. 8 is a cross-sectional view of a packaging material for canned foods, which is an example of an image recorded matter of the present invention.

A thermosetting resin (for example, TW-1407 series, manufactured by T&K TOKA Corporation) is roller-coated on the tinplate base material 351 to form a thermosetting resin layer (base coat) 352, on which an image is formed by the pretreatment layer 353 and the ink composition layer 354. Then, a thermosetting resin (for example, AX-10 series, manufactured by T&K TOKA Corporation) is roller-coated to form a thermosetting resin layer (top coat) 355, and then heat-cured and dried to obtain a packaging material 350 for canned foods.

### Examples

Hereinafter, the present invention will be described in detail with reference to Examples, but the present invention is not limited thereto. In Examples, "part" or "%" are used, but unless otherwise specified, "part by mass" or "% by mass" are indicated.

### [Example 1]

As described below, an ink set for inkjet recording containing an ink composition, a pretreatment liquid, and a maintenance liquid was prepared.

### [Preparation of Ink]

### <Preparation of Cyan Ink>

A pigment dispersion liquid A having a pigment content of 20% by mass was prepared by premixing the mixture in which 6% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.)), 22% by mass of propylene glycol, 0.1% of antifungal agent Proxel GXL (S), and ion-exchanged water (balance; the amount that makes total amount 100% by mass) are added to 20% by mass of a pigment (PB15:3, TGR-SD: manufactured by DIC Corporation), and then dispersing it using a bead mill in which zirconia beads of 0.5mm were filled in 50% by volume. The average particle size of the pigment particles contained in the pigment dispersion liquid was 120nm. The average particle size was measured by "Zetasizer 1000HS" manufactured by Malvern Ltd.

A resin fine particle dispersion liquid (the addition amount is adjusted so that the resin fine particles (solid content) in the ink are 5% by mass), 22% by mass of propylene glycol, 5% by mass of glycerin, 0.2% by mass of surfactant KF351A (Shin-Etsu Silicone), 1% by mass of surfactant E1010 (Nissin Chemical Co., Ltd.), 0.1% by mass of antifungal agent Proxel GXL (S), and ion-exchanged water (balance; the amount that makes total amount 100% by mass) were added to 15% by mass (3% by mass as a solid content) of the pigment dispersion liquid while stirring, and the obtained mixture was filtered through a 1µm filter. There was no substantial compositional change before and after the filtration.

### <Preparation of Yellow Ink>

A pigment dispersion liquid A having a pigment content of 20% by mass is prepared by premixing the mixture in which 6% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.)), 22% by mass of propylene glycol, 0.1% of antifungal agent Proxel GXL (S), and ion-exchanged water (balance; the amount that makes total amount 100% by mass) are added to 20% by mass of a pigment (PY155, 3GP-CT: manufactured by Clariant Ltd.), and then dispersing it using a bead mill in which zirconia beads of 0.5mm were filled in 50% by volume. The average particle size of the pigment particles contained in the pigment dispersion liquid was 120nm. The average particle size was measured by "Zetasizer 1000HS" manufactured by Malvern Ltd.

A resin fine particle dispersion liquid (the addition amount is adjusted so that the resin fine particles (solid content) in the ink are 5% by mass), 22% by mass of propylene glycol, 5% by mass of glycerin, 0.2% by mass of surfactant KF351A (Shin-Etsu Silicone), 1% by mass of surfactant E1010 (Nissin Chemical Co., Ltd.), 0.1% by mass of antifungal agent Proxel GXL (S), and ion-exchanged water (balance; the amount that makes total amount 100% by mass) were added to 15% by mass (3% by mass as a solid content) of the pigment dispersion liquid while stirring, and the obtained mixture was filtered through a 1µm filter. There was no substantial compositional change before and after the filtration.

### <Preparation of Black Ink>

A pigment dispersion liquid A having a pigment content of 20% by mass is prepared by premixing the mixture in which 6% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.)), 22% by mass of propylene glycol, 0.1% of antifungal agent Proxel GXL (S), and ion-exchanged water (balance; the amount that makes total amount 100% by mass) are added to 20% by mass of a pigment (PB7, REGAL330R: manufactured by Cabot Corporation), and then dispersing it using a bead mill in which zirconia beads of 0.5mm were filled in 50% by volume. The average particle size of the pigment particles contained in the pigment dispersion liquid was 120nm. The average particle size was measured by "Zetasizer 1000HS" manufactured by Malvern Ltd.

A resin fine particle dispersion liquid (the addition amount is adjusted so that the resin fine particles (solid content) in the ink are 5% by mass), 22% by mass of propylene glycol, 5% by mass of glycerin, 0.2% by mass of surfactant KF351A (Shin-Etsu Silicone), 1% by mass of surfactant E1010 (Nissin Chemical Co., Ltd.), 0.1% by mass of antifungal agent Proxel GXL (S), and ion-exchanged water (balance; the amount that makes total amount 100% by mass) were added to 15% by mass (3% by mass as a solid content) of the pigment dispersion liquid while stirring, and the obtained mixture was filtered through a 1µm filter. There was no substantial compositional change before and after the filtration.

### <Preparation of magenta ink>

A pigment dispersion liquid A having a pigment content of 20% by mass is prepared by premixing the mixture in which 8% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.)), 22% by mass of propylene glycol, 0.1% of antifungal agent Proxel GXL (S), and ion-exchanged water (balance; the amount that makes total amount 100% by mass) are added to 20% by mass of a pigment (PR122, PV19, RY: manufactured by DIC Corporation), and then dispersing it using a bead mill in which zirconia beads of 0.5mm were filled in 50% by volume. The average particle size of the pigment particles contained in the pigment dispersion liquid was 140nm. The average particle size was measured by "Zetasizer 1000HS" manufactured by Malvern Ltd.

The commercially available resin fine particle dispersion liquid B1 (the addition amount is adjusted so that the resin fine particles (solid content) in the ink are 5% by mass), 21% by mass of propylene glycol, 5% by mass of glycerin, 0.2% by mass of surfactant KF351A (Shin-Etsu Silicone), 1% by mass of surfactant E1010 (Nissin Chemical Co., Ltd.), 0.1% by mass of antifungal agent Proxel GXL (S), and ion-exchanged water (balance; the amount that makes total amount 100% by mass) were added to 20% by mass (4% by mass as a solid content) of the pigment dispersion liquid while stirring, and the obtained mixture was filtered through a 1µm filter. There was no substantial compositional change before and after the filtration.

### [Preparation of Pretreatment liquids 1, 4 and 5]

The following components were mixed and stirred, and then filtered through a 5µm membrane filter to obtain the pretreatment liquid 1.

| | |
|---|---|
| Ion-exchanged water | 66 parts by mass |
| Propylene Glycol | 30 parts by mass |
| Flocculant (calcium acetate: manufactured by Kanto Chemical Co., Inc.) | 3 parts by mass |
| Silicone-based surfactant (BYK (registered trademark) 3450: manufactured by BYK-Chemie Japan Co., Ltd.) | 1 part by mass |

The pretreatment liquids 4 and 5 were prepared in the same manner except that the flocculant in the pretreatment liquid 1 was changed to magnesium acetate tetrahydrate (manufactured by Kanto Chemical Co., Inc.) and aluminum nitrate nonahydrate (manufactured by Fujifilm Wako Pure Chemical Corporation), respectively,

### [Preparation of Maintenance liquids 1 to 20]

The components listed in Tables I and II were mixed and stirred, and then filtered through a 5µm membrane filter to obtain the maintenance liquids 1 to 20 (also referred to as "maint. liquid"). Incidentally, all numerical values in Tables I and II indicate parts by mass except for the pH value, and ion-exchanged water was added so that the total mass of the maintenance liquid was 100 parts by mass. In addition, a blank part of the compound in the table indicates that the compound is not added. The blank part of the pH value was not filled in because it was not measured.

**(Table 1)**

| TABLE I | | | | | | |
|---|---|---|---|---|---|---|
| | | Maint. liquid 1 | Maint. liquid 2 | Maint. liquid 3 | Maint liquid 4 | Maint. liquid 5 |
| pH value | | 6.0 | 5.0 | 6.4 | 2.0 | 6.0 |
| Acidic component | Citric acid monohydrate | 0.5 | 1.0 | 0.3 | 3.0 | |
| | Sodium citrate dihydrate | 14.0 | 5.8 | 12.6 | | |
| | Acetic acid | | | | | 1.0 |
| | Sodium acetate | | | | | 16.4 |
| | Sulfamic acid | | | | | |
| | Glycolic acid | | | | | |
| | Pyrophosphoric acid | | | | | |
| Chelating agent | EDTA | | | | | |
| | HIDA | | | | | |
| | EDTA·4Na | | | | | |
| | GLDA·4Na | | | | | |
| | DHEG·Na | | | | | |
| Activator | Surfactant 1 | | \| | | | |
| | Surfactant 2 | | | | | |
| | Surfactant 3 | | | | | |
| Organic solvent | Propylene glycol | | | | | |
| | 1,2-hexanediol | | | | | |
| | 1,3-butanediol | | | | | |
| | DEGBE | | | | | |
| Ion-exchanged water | | Balance | Balance | Balance | Balance | Balance |
| Total | | 100.0 : | 100.0 | 100.0 | 100.0 | 100.0 |

| | | Maint. liquid 6 | Maint liquid 7 | Maint. liquid 8 | Maint. liquid 9 | |
|---|---|---|---|---|---|---|
| pH value | | 2.5 | 2.0 | 0.9 | 1.1 | |
| Acidic component | Citric acid monohydrate | | | | | |
| | Sodium citrate dihydrate | | | | | |
| | Acetic acid | 3.0 | | | | |
| | Sodium acetate | | | | | |
| | Sulfamic acid | | 3.0 | | | |
| | Glycolic acid | | | 3.0 | | |
| | Pyrophosphoric acid | | | | 3.0 | |
| Chelating agent | EDTA | | | | | |
| | HIDA | | | | | |
| | EDTA·4Na | | | | | |
| | GLDA-4Na | | | | | |
| | DHEG·Na | | | | | |
| Activator | Surfactant 1 | | | | | |
| | Surfactant 2 | | | | | |
| | Surfactant 3 | | | | | |
| Organic solvent | Propylene glycol | | | | | |
| | 1.2-hexanediol | | | | | |
| | 1,3-butanediol | | | | | |
| | DEGBE | | | | | |
| Ion-exchanged water | | Balance | Balance | Balance | Balance | |
| Total | | 100.0 | 100.0 | 100.0 | 100.0 | |

**(Table 2)**

| TABLE II | | | | | | |
|---|---|---|---|---|---|---|
| | | Maint. liquid 11 | Maint. liquid 12 | Maint. liquid 13 | Maint. liquid 14 | Maint. liquid 15 |
| pH value | | 4.5 | 12.5 | | | |
| Acidic component | Citric acid monohydrate | | | | | |
| | Sodium citrate dihydrate | | | | | |
| | Acetic acid | | | | I | |
| | Sodium acetate | | | | | |
| | Sulfamic acid | | | | | |
| | Glycolic acid | | | | | |
| | Pyrophosphoric acid | | | | | |
| Chelating agent | EDTA | 3.0 | | | | |
| | HIDA | | 3.0 | | | |
| | EDTA·4Na | | | | 3.0 | |
| | GLDA·4Na | | | | 3.0 | |
| | DHEG·Na | | | | | 3.0 |
| Activator | Surfactant 1 | | | 3.0 | 3.0 | 3.0 |
| | Surfactant 2 | | | | | |
| | Surfactant 3 | | | 1.0 | 1.0 | 1.0 |
| Organic solvent | Propylene glycol | | | | | |
| | 1,2-hexanediol | | | | | |
| | 1,3-butanediol | | | | | |
| | DEGBE | | | | | |
| Sodium hydrogen carbonate | | | | | | |
| Triethanolamine | | | | 1.0 | 1.0 | 1.0 |
| Ion-exchanged water | | Balance | Balance | Balance | Balance | Balance |
| Total | | 100.0 | 100.0 | 100.0 | 100.0 | 100.0 |

| | | Maint. liquid 16 | Maint. liquid 17 | Maint. liquid 18 | Maint. liquid 19 | Maint liquid 20 |
|---|---|---|---|---|---|---|
| pH value | | | | | | |
| Acidic component | Citric acid monohydrate | | | | | |
| | Sodium citrate dihydrate | | | | | |
| | Acetic acid | | | | | |
| | Sodium acetate | | | | | |
| | Sulfamic acid | | | | | |
| | Glycolic acid | | | | | |
| | Pyrophosphoric acid | | | | | |
| Chelating agent | EDTA | | | | | |
| | HIDA | | | | | |
| | EDTA·4Na | | | | | |
| | GLDA·4Na | | | | | |
| | DHEG·Na | | | | | |
| Activator | Surfactant 1 | | | | | |
| | Surfactant 2 | | | | | 1.0 |
| | Surfactant 3 | 1.0 | 1.0 | 1.0 | 1.0 | |
| Organic solvent | Propylene glycol | 25.0 | | 50.0 | | |
| | 1,2-hexanediol | 4.0 | | 4.0 | 29.0 | |
| | 1,3-butanediol | | 29.0 | | | |
| | DEGBE | | | | | 25.0 |
| Sodium hydrogen carbonate | | | | | | 0.5 |
| Triethanolamine | | | | | | |
| Ion-exchanged water | | Balance | Balance | Balance | Balance | Balance |
| Total | | 100.0 | 100.0 | 100.0 | 100.0 | 100.0 |

The compounds (chemicals) and products (trade names) used are shown below.

### (Acidic component)

Citric acid monohydrate: manufactured by Kanto Chemical Co., Inc.
Sodium citrate dihydrate: manufactured by Kanto Chemical Co., Inc.
Acetic acid: manufactured by Kanto Chemical Co., Inc.
Sodium acetate: manufactured by Kanto Chemical Co., Inc.
Sulfamic acid: Fujifilm Wako Pure Chemical Corporation
Glycolic acid: manufactured by Kanto Chemical Co., Inc.
Pyrophosphoric acid: manufactured by Kanto Chemical Co., Inc.

### (Chelating agent)

EDTA (ethylenediamine tetraacetic acid): manufactured by Kanto Chemical Co., Inc.
HIDA (hydroxyiminodiacetic acid): manufactured by Fujifilm Wako Pure Chemical Corporation
EDTA-4Na (ethylenediamine tetraacetate-tetrasodium): CHELEST (registered trademark) 3D: manufactured by Chelest Corporation
GLDA·4Na (L-glutamate diacetate-tetrasodium): CHELEST (registered trademark) CMG-40: manufactured by Chelest Corporation
DHEG-Na (dihydroxyethylglycine sodium): CHELEST (registered trademark) G-50 : manufactured by Chelest Corporation

### (Surfactant)

Surfactant 1: PEGNOL (registered trademark)-005: manufactured by Toho Chemical Industry Co., Ltd.
Surfactant 2: Sodium oleate: manufactured by Fujifilm Wako Pure Chemical Corporation
Surfactant 3: BYK (registered trademark) 348 : manufactured by BYK-Chemie Japan Co., Ltd.

### (Organic solvent)

Propylene glycol: manufactured by Kanto Chemical Co., Inc.
1,2-hexanediol: manufactured by Kanto Chemical Co., Inc.
1,3-butenediol : manufactured by Kanto Chemical Co., Inc.
DEGBE : Diethylene glycol monobutyl ether: Fujifilm Wako Pure Chemical Corporation

### Sodium hydrogen carbonate: Fujifilm Wako Pure Chemical Corporation

### Triethanolamine: manufactured by Kanto Chemical Co., Inc..

The pH value at 25°C was measured using "HM-41X" manufactured by DKK-TOA Corporation.

### [Evaluation]

The prepared maintenance liquids 1 to 20 and the pretreatment liquids 1, 4, and 5 were evaluated in the following combinations. Table III shows the result.

### (Preparation of Liquid ejection apparatus)

In a liquid ejection apparatus equipped with an independent driving inkjet head (360dpi, ejection volume: small droplet 7pL, medium droplet 15pL, large droplet 23pL) manufactured by Konica Minolta, Inc., the maintenance liquid can be supplied to the cap covering the inkjet head and the bottom of the cap. A means for spraying a maintenance liquid to the nozzle surface and a means for wiping (wiping member) were also attached. As a wiping member, Ruby cell stick head (polyurethane) manufactured by AS ONE Corporation was used.

### (1) Maintainability

The inkjet head of the liquid ejection apparatus was filled with the prepared pretreatment liquids 1, 4, and 5, respectively, and left uncapped at room temperature (25°C) for 1 week to confirm that the dried matter of the pretreatment liquid was precipitated on the nozzle surface of the head. The maintenance liquids 1 to 20 were immersed in the wiping member, the nozzle surface was rubbed, followed by purge maintenance, and the presence or absence of non-ejection nozzle and flight curving nozzle was evaluated based on the following evaluation criteria. However, the purge maintenance is a maintenance operation in which unused ink that has not been ejected to the base material among the liquids supplied to the inkjet head is ejected so that the nozzle is not clogged. In addition, the maintenance work in the following evaluation criteria refers to a series of work of performing purge maintenance after rubbing the nozzle surface, and the work was repeated.
⊚ (double circle): The nozzle was recovered after 3 or less maintenance works.
○ (circle): The nozzle was recovered after 4 or more and 7 or less maintenance works.
△ (triangle): The nozzle was recovered after 8 or more and 10 or less maintenance works.
× (cross mark): The nozzle cannot be recovered even after 11 maintenance works.
**○** (circle) or better was regarded as a pass.

### (2) Head member Resistance

An inkjet head of the liquid ejection apparatus was filled with the prepared pretreatment liquids 1, 4, and 5, respectively, and then the maintenance liquids 1 to 20 were immersed in the wiping member, the nozzle surface was rubbed a plurality of times, followed by purge maintenance, and the presence or absence of defective ejection nozzles such as non-ejection nozzle and flight curving was evaluated based on the following evaluation criteria.
⊚ (double circle): No defective ejection even after rubbing more than 800 times
○ (circle): No defective ejection even after rubbing more than 650 times
△ (triangle): No defective ejection even after rubbing more than 400 times
x (cross mark): Defective ejection occurred after rubbing less than 400 times
○ (circle) or better was regarded as a pass.

**(Table 3)**

| TABLE III | | | | |
|---|---|---|---|---|
| | Pretreatment liquid | Maint. liquid | Maintainability | Head member resistance |
| Example 1 | Pretreatment liquid 1 | Maint. liquid 1 | ⊚ | ⊚ |
| Example 2 | | Maint. liquid 2 | ⊚ | ⊚ |
| Example 3 | | Maint. liquid 3 | ⊚ | ⊚ |
| Example 4 | | Maint. liquid 4 | ⊚ | ○ |
| Example 5 | | Maint. liquid 5 | ⊚ | ○ |
| Example 6 | | Maint liquid 6 | ⊚ | ○ |
| Example 7 | | Maint liquid 7 | ○ | ○ |
| Example 8 | | Maint liquid 8 | ⊚ | ○ |
| Example 9 | | Maint liquid 9 | ⊚ | ○ |
| Example 10 | Pretreatment liquid 4 | Maint. liquid 3 | ⊚ | ⊚ |
| Example 11 | | Maint. liquid 4 | ⊚ | ○ |
| Example 12 | | Maint. liquid 6 | ⊚ | |
| Example 13 | | Maint. liquid 7 | ○ | ○ |
| Example 14 | | Maint liquid 8 | ⊚ | ○ |
| Example 15 | | Maint. liquid 9 | ⊚ | ○ |

| | Pretreatment liquid | Mairit. liquid | Maintainability | Head member resistance |
|---|---|---|---|---|
| Example 16 | Pretreatment liquid 5 | Maint. liquid 3 | ⊚ | ⊚ |
| Example 17 | | Maint. liquid 4 | ⊚ | ○ |
| Example 18 | | Maint. liquid 6 | ⊚ | ○ |
| Example 19 | | Maint liquid 7 | ○ | |
| Example 20 | | Maint liquid 8 | ⊚ | |
| Example 21 | | Maint. liquid 9 | ⊚ | ○ |
| Comparative Example 1 | Pretreatment liquid 1 | Maint. liquid 11 | × | △ |
| Comparative Example 2 | | Maint. liquid 12 | × | ○ |
| Comparative Example 3 | | Maint. liquid 13 | × | ○ |
| Comparative Example 4 | | Maint liquid 14 | × | ○ |
| Comparative Example 5 | | Maint liquid 15 | × | ○ |
| Comparative Example 6 | | Maint. liquid 16 | × | ○ |
| Comparative Example 7 | | Maint. liquid 17 | × | ○ |
| Comparative Example 8 | | Maint liquid 18 | × | ○ |
| Comparative Example 9 | | Maint liquid 19 | × | ○ |
| Comparative Example 10 | | Maint. liquid 20 | × | ○ |

From Table III, it can be seen that in the ink set for inkjet recording of the present invention, the pretreatment liquid contains a polyvalent metal salt as a flocculant, and the maintenance liquid contains an acidic component, whereby the maintainability is improved. Further, it can be seen that the degradation of the member of the inkjet head is suppressed by bringing pH close to neutral.

### [Example 2]

In order to clarify the difference in the effect due to the difference in the composition of various pretreatment liquids, the differences in the effects of the ejection stability and the head member resistance were first evaluated using the maintenance liquid 3 as a common maintenance liquid, and further, the difference in the effect of the maintainability was evaluated as follows in the same manner as in Example 1.

### [Preparation of Pretreatment liquids 2, 3 and 6 to 16]

The components listed in Tables IV and V were mixed and stirred, and then filtered through a 5µm membrane filter to obtain a pretreatment liquid. Incidentally, all numerical values in Tables IV and V indicate parts by mass except for the pH value and the acidic component content ratio, and ion-exchanged water was added so that the total mass of the pretreatment liquid was 100 parts by mass. In addition, a blank part of the compound in the table indicates that the compound is not added. The blank part of the acidic component content ratio was not filled because the acidic component was not included and could not be calculated.

Next, the following evaluations were performed using the pretreatment liquids 1 to 16 and the maintenance liquid 3. The products (trade names) used are the same as those in Example 1. The acidic component content ratio in the table represents the ratio (%) of the mass of the acidic component to the mass of the polyvalent metal salt in the pretreatment liquid.

**(Table 4)**

| TABLE IV | | | | | |
|---|---|---|---|---|---|
| | | Pretreatment liquid 1 | Pretreatment liquid 2 | Pretreatment liquid 3 | Pretreatment liquid 4 |
| pH value | | 8.3 | 8.3 | 8.3 | 8.6 |
| Metal salt polyvalent | Calcium acetate | 3.0 | 3.0 | 3.0 | |
| | Magnesium acetate tetrahydrate | | | | 4.0 |
| | Aluminum nitrate nonahydrate | | | | |
| Acidic component | Citric acid | | | | |
| | Acetic acid | | | | |
| | Sulfamic acid | | | | |
| | Glycolic acid | | | | |
| | Pyrophosphoric acid | | | | |
| Propylene glycol | | 30.0 | | | 30.0 |
| Dipropylene glycol | | | 30.0 | | |
| 2-methyl-1, 3-propenediol | | | | 30.0 | |
| Ion-exchanged water | | Balance | Balance | Balance | Balance |
| Total | | 100.0 | 100.0 | 100.0 | 100.0 |
| Acidic component content ratio (% by mass) | | | | | |

| | | Pretreatment liquid 5 | Pretreatment liquid 6 | Pretreatment liquid 7 | Pretreatment liquid 8 |
|---|---|---|---|---|---|
| pH value | | 5.0 | 5.3 | 6.0 | 5.5 |
| Metal salt polyvalent | Calcium acetate | | 3.0 | 3.0 | 3.0 |
| | Magnesium acetate tetrahydrate | | | | |
| | Aluminum nitrate nonahydrate | 5.0 | | | |
| Acidic component | Citric acid | | 0.2 | | |
| | Acetic acid | | | 0.2 | 0.5 |
| | Sulfamic acid | | | | |
| | Glycolic acid | | | | |
| | Pyrophosphoric acid | | | | |
| Propylene glycol | | 30.0 | 30.0 | 30.0 | 30.0 |
| Dipropylene glycol | | | | | |
| 2-methyl-1, 3-propanediol | | | | | |
| Ion-exchanged water | | Balance | Balance | Balance | Balance |
| Total | | 100.0 | 100.0 | 100.0 | 100.0 |
| Acidic component content ratio (% by mass) | | | 6.7 | 6.7 | 16,7 |

**(Table 5)**

| TABLE V | | | | | |
|---|---|---|---|---|---|
| | | Pretreatment liquid 9 | Pretreatment liquid 10 | Pretreatment liquid 11 | Pretreatment liquid 12 |
| pH value | | 5.2 | 4.8 | 5.1 | 5.0 |
| Metal salt polyvalent | Calcium acetate | 3.0 | 3.0 | 3.0 | 3.0 |
| | Magnesium acetate tetrehydrate | | | | |
| | Aluminum nitrate nonahydrate | | | | |
| Acidic component | Citric acid | | | | |
| | Acetic acid | 1.0 | 3.0 | 1.2 | 1.5 |
| | Sulfamic acid | | | | |
| | Glycolic acid | | | | |
| | Pyrophosphoric acid | | | | |
| Propylene glycol | | 30.0 | 30.0 | 30.0 | 30.0 |
| Dipropylene glycol | | | | | |
| 2-methyl-1, 3-propanediol | | | | | |
| Ion-exchanged water | | Balance | Balance | Balance | Balance |
| Total | | 100.0 | 100.0 | 100.0 | 100.0 |
| Acidic component content ratio (% by mass) | | 33.3 | 100.0 | 40.4 | 50.0 |

| | | Pretreatment liquid 13 | Pretreatment liquid 14 | Pretreatment liquid 15 | Pretreatment liquid 16 |
|---|---|---|---|---|---|
| pH value | | 5.0 | 3.7 | 2.5 | 1.8 |
| 3Metal salt polyvalent | Calcium acetate | 3.0 | 3.0 | 3.0 | 3.0 |
| | Magnesium acetate tetrahydrate | | | | |
| | Aluminum nitrate nonahydrate | | | | |
| Acidic component | Citric acid | | | | |
| | Acetic acid | | | | |
| | Sulfamic acid | 1.0 | 3.0 | | |
| | Glycolic acid | | | 0.5 | |
| | Pyrophosphoric | | | | 0.5 |
| Propytene glycol | | 30.0 | 30.0 | 30.0 | 30.0 |
| Dipropylene glycol | | | | | |
| 2-methyl-1, 3-propanediol | | | | | |
| Ion-exchanged water | | Balance | Balance | Balance | Balance |
| Total | | 100.0 | 100.0 | 100.0 | 100.0 |
| Acidic component content ratio (%by mass) | | 33.3 | 100.0 | 16.7 | 16.7 |

### [Evaluation]

The following evaluations were performed on the prepared pretreatment liquids 1 to 16. Table VI shows the result. As the liquid ejecting apparatus, the liquid ejection apparatus described in Example 1 was used.

### (3) Head member resistance

An inkjet head of the liquid ejection apparatus was filled with the prepared pretreatment liquids 1 to 16, respectively, and then the pretreatment liquid was continuously ejected from the nozzle. Thereafter, the presence or absence of defective ejection nozzles such as non-ejection nozzle and flight curving was evaluated based on the following evaluation criteria.
⊚ (double circle): No defective ejection even after 2 weeks or more
○ (circle): Defective ejection occurred after 1 week or more and less than 2 weeks
× (cross mark): Defective ejection occurred after less than 1 week
**○** (circle) or better was regarded as a pass.

### (4) Ejection stability

An inkjet head of the liquid ejection apparatus is filled with the prepared pretreatment liquids 1 to 16, respectively, and left at room temperature (25°C). The time until non-ejection nozzle and flight curving nozzle were confirmed was evaluated based on the following criteria.
⊚ (double circle): 2 weeks or more
○ (circle): 1 week or more and less than 2 weeks
× (cross mark): less than 1 week
**○** (circle) or better was regarded as a pass.

### (5) Maintainability

After the evaluation of the ejection stability, the maintenance work described in the above maintainability evaluation in Example 1 was performed, and the same evaluation was performed, and as a result, all of the pretreatment liquids 1 to 16 were ⊚ (double circle).

**(Table 6)**

| TABLE VI | | | | |
|---|---|---|---|---|
| | Pretreatment liquid | Head member resistance | Ejection Stability | Maintainability |
| Example 22 | Pretreatment liquid 1 | ⊚ | ○ | ⊚ |
| Example 23 | Pretreatment liquid 2 | ⊚ | ○ | ⊚ |
| Example 24 | Pretreatment liquid 3 | ⊚ | ○ | ⊚ |
| Example 25 | Pretreatment liquid 4 | ⊚ | ○ | ⊚ |
| Example 26 | Pretreatment 5 | ⊚ | ○ | ⊚ |
| Example 27 | Pretreatment liquid 6 | ⊚ | ⊚ | ⊚ |
| Example 28 | Pretreatment liquid 7 | ⊚ | ⊚ | ⊚ |
| Example 29 | Pretreatment liquid 8 | ⊚ | ⊚ | ⊚ |
| Example 30 | Pretreatment liquid 9 | ⊚ | ⊚ | ⊚ |
| Example 31 | Pretreatment liquid 10 | ○ | ⊚ | ⊚ |
| Example 32 | Pretreatment liquid 11 | ⊚ | ⊚ | ⊚ |
| Example 33 | Pretreatment liquid 12 | ⊚ | ⊚ | ⊚ |
| Example 34 | Pretreatment liquid 13 | ○ | ⊚ | ⊚ |
| Example 35 | Pretreatment liquid 14 | ○ | ⊚ | ⊚ |
| Example 36 | Pretreatment liquid 15 | ○ | ⊚ | ⊚ |
| Example 37 | Pretreatment liquid 16 | ○ | ⊚ | ⊚ |

From Table VI, it can be seen that the pretreatment liquid included in the ink set for inkjet recording of the present invention further contains an acidic component, thereby making it difficult to precipitate the dried matter of the pretreatment liquid containing carbonate. Further, it can be seen that the degradation of the member of the inkjet head is suppressed by bringing pH close to neutral.

Therefore, when the polyvalent metal salt is used as a flocculant of the pretreatment liquid, the dried matter of the pretreatment liquid containing the carbonate precipitated on the nozzle of the inkjet head can be removed by including the acidic component in the maintenance liquid. Further, by including an acidic component in the pretreatment liquid, it becomes difficult to precipitate the dried matter of the pretreatment liquid containing carbonate.

That is, it is possible to provide an ink set for inkjet recording in which adverse effects caused by a pretreatment liquid component are reduced and the maintainability is improved.

### Industrial Applicability

The present invention can be applied to an ink set for inkjet recording, an inkjet recording method, a maintenance method, and an inkjet recording apparatus, in which adverse effects caused by a pretreatment liquid component are reduced and the maintainability is improved.

### Description of Reference Numerals

1 inkjet recording apparatus
10 pretreatment liquid applicator
11 inkjet head
12 pretreatment liquid droplet
14 first dryer
20 ink composition ejection unit
21 inkjet head
22 ink composition droplet
23 second dryer
101 head unit
120 droplet ejecting unit
121 nozzle
M recording medium
W width of head unit 1 in the direction Y perpendicular to the scanning direction X
PL length of whole print area P in the direction Y, Print area length
130 scanner
Im image forming area
A1 to A6 print area
P whole print area
201 inkjet recording apparatus
210 conveyor
220K head unit
216 guide rail
226 carriage
230 maintenancer
231 maintenance liquid layer
235 wiping member
239 pressing member
260 maintenance liquid
C pretreatment layer
F base material
P image recorded matter
R ink composition layer
350 packaging material for canned foods
351 tinplate base material
352 thermosetting resin layer (base coat)
353 pretreatment layer
354 ink composition layer
355 thermosetting resin layer (top coat)

## Claims

1. An ink set for inkjet recording, comprising an ink composition, a pretreatment liquid, and a maintenance liquid, wherein
the pretreatment liquid contains a polyvalent metal salt, and
the maintenance liquid contains an acidic component.

2. The ink set for inkjet recording according to claim 1, wherein the pretreatment liquid contains an acidic component.

3. The ink set for inkjet recording according to claim 1 or 2, wherein the polyvalent metal salt contains at least a metal element of either calcium or magnesium.

4. The ink set for inkjet recording according to any one of claims 1 to 3, wherein the pretreatment liquid contains at least an acid of citric acid, acetic acid or glycolic acid.

5. The ink set for inkjet recording according to any one of claims 1 to 4, wherein the maintenance liquid contains at least an acid of citric acid, acetic acid or glycolic acid.

6. The ink set for inkjet recording according to any one of claims 1 to 5, wherein the maintenance liquid contains at least an acid of either citric acid or acetic acid, and contains a salt thereof.

7. The ink set for inkjet recording according to any one of claims 1 to 6, wherein a pH value of the maintenance liquid is in the range of 5.0 to 6.4 at 25°C.

8. An inkjet recording method for recording using the ink set for inkjet recording according to any one of claims 1 to 7, comprising:
a step of applying the pretreatment liquid simultaneously with or immediately before a step of ejecting the ink composition.

9. The inkjet recording method according to claim 8, comprising:
a step of cleaning a head for pretreatment liquid for applying the pretreatment liquid using the maintenance liquid.

10. The inkjet recording method according to claim 9, comprising:
a step of cleaning the head for pretreatment liquid using a wiping member.

11. A maintenance method for an inkjet recording apparatus, comprising:
using the ink set for inkjet recording according to any one of claims 1 to 7.

12. An inkjet recording apparatus, comprising:
using the inkjet recording method according to any one of claims 8 to 10.
